# EUROPÄISCHE PATENTANMELDUNG

(11) **EP 4 235 422 A1**
(43) Veröffentlichungstag der Anmeldung: **30.08.2023**
(21) Anmeldenummer: 22158218.2
(22) Anmeldetag: 23.02.2022
(51) Int. Cl.: G06F 9/50

(54) **VERFAHREN ZUM BESTIMMEN EINES OPTIMALEN AUSFÜHRUNGSORTES EINER APPLIKATION**

(71) Anmelder: Siemens Healthcare GmbH, 91052 Erlangen (DE)
(72) Erfinder: Blum, Thomas, 91077 Neunkirchen A. Br (DE)

(57) **Zusammenfassung**

Die Erfindung betrifft ein computerimplementiertes Verfahren zum Bestimmen eines optimalen Ausführungsortes einer Applikation. Das Verfahren umfasst einen Verfahrensschritt eines Bestimmens (DET-1) von verfügbaren Ausführungsorten. Dabei stellt jeder der verfügbaren Ausführungsorte wenigstens einen Ausführungsparameter bereit. Dabei ist der von einem verfügbaren Ausführungsort bereitgestellte wenigstens eine Ausführungsparameter dazu ausgebildet, eine Eignung des entsprechenden verfügbaren Ausführungsortes zu quantifizieren. Das Verfahren umfasst einen weiteren Verfahrensschritt eines Bestimmens (DET-2) des optimalen Ausführungsortes in Abhängigkeit der bereitgestellten Ausführungsparameter. Dabei ist der optimale Ausführungsort derjenige Ausführungsort, welcher gemäß der bereitgestellten Ausführungsparameter am besten zum Ausführen der Applikation geeignet ist. Das Verfahren umfasst außerdem einen Verfahrensschritt eines Bereitstellens (PROV-1) des optimalen Ausführungsortes.

## Beschreibung

Die vorliegende Erfindung betrifft ein Verfahren zum Bestimmen eines optimalen Ausführungsortes einer Applikation und ein Bestimmungssystem, welches ausgebildet ist, das Verfahren auszuführen.

Es ist bekannt, dass Applikationen bzw. Computer-Applikationen bzw. mit einem Computer ausführbare Applikationen immer komplexer und rechenaufwändiger werden. Somit wird auch das Ausführen dieser Applikationen immer rechenaufwändiger und es werden immer mehr Ressourcen benötigt, um die Applikationen zeitnah und in einer guten Qualität auszuführen. Aus diesem Grund ist eine optimale Wahl eines Ausführungsortes bzw. eines Ortes, an dem eine Applikation ausgeführt werden soll, von großer Relevanz.

Häufig, insbesondere bei Applikationen aus dem medizinischen Umfeld ist es wichtig, dass eine Applikation nach einem Starten der Applikation möglichst zeitnah ausgeführt wird. Im medizinischen Umfeld soll damit sichergestellt werden, dass beispielsweise eine Diagnose, welche durch Anwenden der Applikation auf Daten, beispielsweise Untersuchungsdaten, bestimmt wird, möglichst zeitnah und in einer guten Qualität bereitsteht, um über ein weiteres medizinisches Vorgehen entscheiden zu können. Dabei können für verschiedenen Daten und/oder verschiedene medizintechnische Geräte verschiedene, auf die Daten und/oder das medizintechnische Gerät angepasste Applikationen ausgeführt werden.

Die Daten, auf die eine Applikation angewendet werden soll bzw. die mit einer Applikation verarbeitet werden sollen, werden dabei im medizinischen Umfeld typischerweise mit einem medizintechnischen Gerät, beispielsweise einem Magnet-Resonanz-Tomographie-Gerät oder einem Computer-Tomographie-Gerät oder einer Röntgenanlage oder einem Labordiagnostiksystem oder einem Ultraschall-Gerät etc. erfasst.

Die Applikation kann dann direkt auf dem medizintechnischen Gerät ausgeführt werden. In diesen Fall ist das medizintechnische Gerät der Ausführungsort der Applikation. Wenn jedes der medizintechnischen Geräte mit einer ausreichenden Rechenleistung ausgestattet werden würde, um die Applikation zeitnah und mit einer guten Qualität auszuführen, würde das hohe Kosten verursachen. Zudem würde die verfügbare Rechenleistung der einzelnen medizintechnischen Geräte typischerweise dabei nicht optimal genutzt werden. Typischerweise werden nicht alle medizintechnischen Geräte in einem medizinischen Umfeld gleichermaßen genutzt. Dies würde dazu führen, dass häufig verfügbare Rechenleistung auf einem medizintechnischen Gerät zu einem Zeitpunkt nicht genutzt wird, während auf einem anderen medizintechnischen Gerät die verfügbare Rechenleistung möglicherweise immer noch nicht ausreicht und es zu Verzögerungen beim Ausführen der Applikation kommt. Dies führt zu hohen Kosten für nicht optimal ausgenutzte Ressourcen an Rechenleistung, ohne dass sichergestellt ist, dass das gewünschte Ziel tatsächlich immer erreicht wird.

Auch eine applikationsspezifische Beschränkung beispielsweise in Bezug auf die durch die Applikation maximal belegte Rechenleistung kann zu oben beschriebenen Problemen führen und begünstigt außerdem ein unnötiges Verzögern beim Ausführen der Applikation, wenn ausreichend Rechenleistung zu Verfügung stehen würde.

Es ist bekannt, dass, um dieses Problem zu umgehen, wenigstens eine externe Recheneinheiten als Ausführungsort für die Applikationen verwendet wird, die von den verschiedenen medizintechnischen Geräten gemeinsam genutzt wird. Eine solche externe Recheneinheit kann beispielsweise ein lokales Rechenzentrum in einem sogenannten "Edge-Layer" sein. Alternativ oder zusätzlich kann eine solche externe Recheneinheit von einem Cloud-Provider in einer sogenannten "Cloud-Layer" bzw. in einem Cloud-System bereitgestellt werden. Dabei versendet ein medizintechnisches Gerät die mit dem medizintechnischen Gerät erfassten Daten an eine derartige externe Recheneinheit. Die Applikation wird auf der externen Recheneinheit ausgeführt und auf die Daten angewendet.

Typischerweise wird dabei jeder Applikation wenigstens eine externe Recheneinheit fest zugeordnet. Mit anderen Worten wird eine Applikation typischerweise auf einer oder mehreren fest zugeordneten externen Recheneinheit ausgeführt. Mit anderen Worten wird jeder Applikation wenigstens ein fester Ausführungsort zugeordnet. Diese Zuordnung kann dabei entweder dauerhaft fest vorgegeben werden oder von einem Anwender beim Starten der Applikation manuell festgelegt werden.

Dabei führt eine feste Zuordnung ebenfalls zu oben beschriebenen Problemen wie bei Verwendung der einzelnen medizintechnischen Geräte als Ausführungsorte, da keine flexible Anpassung an die tatsächlich genutzte Rechenleistung der Ausführungsorte möglich ist. Eine manuelle Auswahl des Ausführungsortes nutzt auf Grund fehlender Informationen beispielsweise über die Auslastung der verschiedenen externen Recheneinheiten typischerweise die vorhandenen Ressourcen nicht optimal und begünstigt somit ebenfalls ein verzögertes Ausführen der Applikation.

Zudem muss sichergestellt sein, dass die Daten auch tatsächlich auf die externe Recheneinheit übertragen werden können und dürfen. Dafür müssen zum einen physische Übertragungsmöglichkeiten gegeben sein, zum anderen müssen insbesondere im medizinischen Umfeld Vorgaben bezüglich Datenschutzrichtlinien beachtet werden. Das Übermitteln bzw. Versenden der Daten an die externe Recheneinheit kann zudem zu einer unerwünschten Zeitverzögerung führen. Das Übermitteln bzw. eine Zeitdauer zum Übermitteln der Daten kann von einer Bandbreite der Verbindung zwischen dem medizintechnischen Gerät und dem Ausführungsort bzw. der externen Recheneinheit abhängen. Die Bandbreite ist dabei typischerweise zeitlich variabel. Diese wird bei einer festen Zuordnung typischerweise nicht berücksichtigt.

Das beschriebene Beispiel aus dem medizinischen Umfeld lässt sich selbstverständlich analog auf andere, insbesondere auch nicht medizinische, Umgebungen übertragen.

Es ist daher die Aufgabe der vorliegenden Erfindung, ein Verfahren bereitzustellen, das eine optimale Wahl eines Ausführungsortes, auf welchem die Applikation mit möglichst geringer Zeitverzögerung ausgeführt werden kann, ermöglicht.

Die Aufgabe wird gelöst durch ein Verfahren zum Bestimmen eines optimalen Ausführungsortes einer Applikation, durch ein Bestimmungssystem zum Bestimmen eines optimalen Ausführungsortes einer Applikation, durch ein Computerprogrammprodukt und durch ein computerlesbares Speichermedium gemäß den unabhängigen Ansprüchen. Vorteilhafte Weiterbildungen sind in den abhängigen Ansprüchen und in der folgenden Beschreibung aufgeführt.

Nachstehend wird die erfindungsgemäße Lösung der Aufgabe sowohl in Bezug auf die beanspruchten Vorrichtungen als auch in Bezug auf das beanspruchte Verfahren beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Vorrichtung gerichtet sind) auch mit den Merkmalen, die in Zusammenhang mit einem Verfahren beschrieben oder beansprucht sind, weitergebildet sein. Die entsprechenden funktionalen Merkmale des Verfahrens werden dabei durch entsprechende gegenständliche Module ausgebildet.

Weiterhin wird die erfindungsgemäße Lösung der Aufgabe sowohl in Bezug auf Verfahren und Vorrichtungen zum Bestimmen eines optimalen Ausführungsortes einer Applikation als auch in Bezug auf Verfahren und Vorrichtungen zum Bereitstellen einer trainierten Funktion beschrieben. Hierbei können Merkmale und alternative Ausführungsformen von Datenstrukturen und/oder Funktionen bei Verfahren und Vorrichtungen zur Bestimmung auf analoge Datenstrukturen und/oder Funktionen bei Verfahren und Vorrichtungen zum Anpassen/Optimieren/Trainieren übertragen werden. Analoge Datenstrukturen können hierbei insbesondere durch die Verwendung der Vorsilbe "Trainings" gekennzeichnet sein. Weiterhin können die in Verfahren und Vorrichtungen zum Bestimmen eines optimalen Ausführungsortes für eine Applikation verwendeten trainierten Funktionen insbesondere durch Verfahren zum Bereitstellen der trainierten Funktion trainiert bzw. angepasst worden und/oder bereitgestellt worden sein.

Die Erfindung betrifft ein computerimplementiertes Verfahren zum Bestimmen eines optimalen Ausführungsortes einer Applikation. Das Verfahren umfasst einen Verfahrensschritt eines Bestimmens von verfügbaren Ausführungsorten. Dabei stellt jeder der verfügbaren Ausführungsorte einen Ausführungsparameter bereit. Dabei ist der von einem verfügbaren Ausführungsort bereitgestellte wenigstens eine Ausführungsparameter dazu ausgebildet, eine Eignung des entsprechenden verfügbaren Ausführungsortes zu quantifizieren. Das Verfahren umfasst außerdem einen Verfahrensschritt eines Bestimmens des optimalen Ausführungsortes in Abhängigkeit der bereitgestellten Ausführungsparameter. Dabei ist der optimale Ausführungsort derjenige Ausführungsort, welcher gemäß der bereitgestellten Ausführungsparameter am besten zum Ausführen der Applikation geeignet ist. Das Verfahren umfasst außerdem einen Verfahrensschritt eines Bereitstellens des optimalen Ausführungsortes.

Die Applikation ist dazu ausgebildet, auf bzw. von dem Ausführungsort ausgeführt zu werden. Insbesondere kann die Applikation auf Daten angewendet werden, um ein Ergebnis in Abhängigkeit der Daten zu generieren. Mit anderen Worten kann die Applikation dazu ausgebildet sein, Daten zu verarbeiten. Die Applikation kann insbesondere eine Applikation in einem medizinischen Umfeld sein. Beispielsweise kann die Applikation eine Applikation zur Analyse und/oder Verarbeitung und/oder Rekonstruktion von Bilddaten bzw. Roh-Bilddaten sein. Alternativ kann die Applikation eine Applikation zur Analyse von Labordaten sein. Alternativ kann die Applikation eine Applikation zur Analyse von Arbeitsschritten bzw. Untersuchungsschritten im medizinischen Umfeld sein. Die Daten können dabei beispielsweise Untersuchungsdaten sein. Beispielsweise können die Daten Bilddaten bzw. Roh-Bilddaten oder Labordaten oder Therapiedaten etc. sein.

Ein Ausführungsort kann dabei eine Rechenleistung zum Ausführen der Applikation bereitstellen. Der Ausführungsort kann beispielsweise ein lokales Rechenzentrum und/oder ein Cloud-System sein. Mit anderen Worten kann der Ausführungsort in einer Edge-Layer oder in einer Cloud-Layer angeordnet sein. Alternativ kann der Ausführungsort ein lokaler Rechner, beispielsweise ein Gerät, insbesondere ein medizintechnisches Gerät sein. Insbesondere kann der Ausführungsort das medizintechnische Gerät sein, mit welchem die Daten, die mit der Applikation verarbeitet werden sollen, erfasst werden.

Die Daten, auf die die Applikation angewendet werden kann, können in einer Einrichtung, beispielsweise einem Krankenhaus oder einer Arztpraxis oder einem Labor, erfasst werden. Die Edge-Layer bzw. das in der Edge-Layer laufende lokale Rechenzentrum ist dann in der Nähe oder in der Einrichtung angeordnet. Die Cloud-Layer bzw. der das in der Cloud-Layer laufende Cloud-System ist dabei entfernt von der Einrichtung angeordnet.

Beim Bestimmen der verfügbaren Ausführungsorte werden die Ausführungsorte bestimmt, an welchen die Applikation ausgeführt werden kann.

Wenn die Applikation auf Daten angewendet werden soll, können bei den verfügbaren Ausführungsorten nur diejenigen Ausführungsorte berücksichtigt werden, an welche die Daten übertragen bzw. versendet werden können und/oder dürfen. Dabei kann beispielsweise eine Übertragungsbandbreite berücksichtigt werden. Alternativ oder zusätzlich können Datenschutzrichtlinien in Bezug auf die Daten und die entsprechenden Ausführungsorte berücksichtigt werden.

Jeder der verfügbaren Ausführungsorte stellt dabei wenigstens einen Ausführungsparameter bereit. Der von einem Ausführungsort bereitgestellte Ausführungsparameter gibt dabei an wie geeignet der Ausführungsort zum Ausführen der Applikation ist. Mit anderen Worten beschreibt der von einem Ausführungsort bereitgestellte Ausführungsparameter eine Eigenschaft des Ausführungsortes. Insbesondere kann die Eigenschaft des Ausführungsortes in Form des Ausführungsparameters quantifiziert werden. Auf diese Weise kann eine Eignung des Ausführungsortes zum Ausführen der Applikation quantifiziert werden. Dabei sind die bereitgestellten Ausführungsparameter vorteilhafterweise derart ausgebildet, dass sie für die verschiedenen Ausführungsorte miteinander verglichen werden können. Mit anderen Worten kann der wenigstens eine Ausführungsparameter für alle Ausführungsorte dieselbe Eigenschaft beschreiben bzw. quantifizieren. Beispielsweise kann der wenigstens eine Ausführungsparameter eines Ausführungsortes angeben, wie stark der bereitstellende Ausführungsort ausgelastet ist bzw. wie viel Rechenkapazität zu Verfügung steht. Auf diese Weise kann beispielsweise die verfügbare Rechenkapazität der verfügbaren Ausführungsorte verglichen werden.

Die Ausführungsparameter könne dabei insbesondere absolute Werte für die Eigenschaft der jeweiligen Ausführungsorte angeben. Alternativ können die Ausführungsparameter die Eigenschaft der Ausführungsorte durch einen relativen Wert beschreiben bzw. quantifizieren. Die Ausführungsparameter können für verschiedene Eigenschaften verschieden sein.

Wenn ein oder mehrere Ausführungsorte den wenigstens einen Ausführungsparameter nicht zu Verfügung stellen können, kann in Ausführungen der Erfindung stattdessen ein Default-Wert bereitgestellt werden. Der Default-Wert kann beispielsweise ein NaN Wert sein. Mit anderen Worten kann dann der Ausführungsparameter der entsprechenden Ausführungsorte eine Default-Wert angeben bzw. umfassen.

In dem Verfahrensschritt des Bestimmens des optimalen Ausführungsortes wird der optimale Ausführungsort in Abhängigkeit der bereitgestellten Ausführungsparameter bestimmt. Dabei wird derjenige Ausführungsort als optimaler Ausführungsort bestimmt, der gemäß der bereitgestellten Ausführungsparameter am besten zum Ausführen der Applikation geeignet ist. Mit anderen Worten werden beim Bestimmen des optimalen Ausführungsortes die bereitgestellten Ausführungsparameter verglichen und der derjenige Ausführungsort als der optimale Ausführungsort bestimmt, der gemäß der Ausführungsparameter am besten zum Ausführen der Applikation geeignet ist. Dabei kann beispielsweise berücksichtigt werden, an welchem Ausführungsort das Ergebnis der Applikation am frühesten bereitgestellt werden kann.

Beispielsweise kann derjenige Ausführungsort als optimaler Ausführungsort bestimmt werden, der die meiste Rechenkapazität frei verfügbar hat, wenn die Ausführungsparameter die frei verfügbare Rechenkapazität der Ausführungsorte angeben. Alternativ oder zusätzlich kann derjenigen Ausführungsort als optimale Ausführungsort bestimmt werden, der die Applikation am frühesten ausführen kann, wenn die Applikationsparameter angeben, wann die Rechenkapazität der verschiedenen Ausführungsorte zu Verfügung steht.

In dem Verfahrensschritt des Bereitstellens des optimalen Ausführungsortes wird eine Information darüber bereitgestellt, welcher Ausführungsort der optimale Ausführungsort ist. Insbesondere kann die Information einem Nutzer bereitgestellt werden. Alternativ kann die Information derart bereitgestellt werden, dass die Applikation automatisch direkt an dem optimalen Ausführungsort ausgeführt wird. Dabei kann die Information in Ausführungen der Erfindung derart bereitgestellt werden, dass die Daten, auf die die Applikation angewendet werden soll, direkt an den optimalen Ausführungsort übertragen bzw. versendet werden, wenn die Applikation auf Daten angewendet werden soll.

Der Erfinder hat erkannt, dass in Abhängigkeit der Ausführungsparameter der optimale Ausführungsort bestimmt werden kann. Der Erfinder hat erkannt, dass dabei eine aktuelle Situation, beispielsweise Auslastung, der Ausführungsorte zu dem Zeitpunkt, an dem die Applikation ausgeführt werden soll, berücksichtigt werden kann. Der Erfinder hat erkannt, dass auf diese Weise vorhandene Rechenkapazitäten bzw. Rechenleistungen optimal ausgenutzt werden können. Auf diese Weise kann ein Bereitstellen von unnötigen Rechenkapazitäten reduziert oder verhindert werden. Dies führt zu einer deutlichen Kostenersparnis. Außerdem kann sichergestellt werden, dass die Applikation so schnell wie möglich ausgeführt wird und Zeitverzögerungen beispielsweise durch Wartezeiten bis zum Ausführen der Applikation oder durch ein verlangsamtes Ausführen aufgrund zu geringer verfügbarer Rechenleistung vermieden werden. Somit kann das durch Ausführen der Applikation generierte Ergebnis in Abhängigkeit der vorhandenen Ressourcen schnellstmöglich bereitgestellt werden.

Nach einem Aspekt der Erfindung umfasst das Verfahren außerdem einen Verfahrensschritt eines Bereitstellens von wenigstens einem Applikationsparameter durch die Applikation. Dabei gibt der Applikationsparameter eine Bedingung vor, die zum Ausführen der Applikation erfüllt sein muss. Dabei stellt in dem Verfahrensschritt des Bestimmens der verfügbaren Ausführungsorte jeder der verfügbaren Ausführungsorte einen dem wenigstens einen Applikationsparameter entsprechenden Ausführungsparameter bereit. Das Verfahren umfasst außerdem einen Verfahrensschritt eines Bestimmens eines optimalen Ausführungsparameters. Dabei ist der optimale Ausführungsparameter derjenige Ausführungsparameter, der die durch den wenigstens einen Applikationsparameter vorgegebene Bedingung am besten erfüllt. Dabei ist der in dem Verfahrensschritt des Bestimmens des optimalen Ausführungsortes bestimmte optimale Ausführungsort derjenige Ausführungsort, der den optimalen Ausführungsparameter bereitstellt.

In dem Verfahrensschritt des Bereitstellens des wenigstens einen Applikationsparameters wird der für die Applikation spezifische Applikationsparameter bereitgestellt. Der Applikationsparameter gibt dabei eine Bedingung vor, die ein Ausführungsort erfüllen muss, damit die Applikation dort ausgeführt werden kann. Beispielsweise kann der Applikationsparameter eine minimal notwendige Rechenkapazität angeben.

Dabei geben die bereitgestellten Ausführungsparameter für jeden der Ausführungsorte an, wie gut der entsprechende Ausführungsort die durch den Ausführungsparameter vorgegebene Bedingung erfüllt. Dabei können der Ausführungsparameter eines Ausführungsortes beispielsweise lediglich angeben, ob der Ausführungsort die Bedingung erfüllt. Alternativ kann der Ausführungsparameter einen Wert angeben, der mit einem in der Bedingung des Applikationsparameters genannten Wert verglichen werden kann. Insbesondere kann der Ausführungsparameter dafür einen absoluten Wert angeben, der mit dem durch die Bedingung des Applikationsparameters vorgegebenen Wert verglichen werden kann. Alternativ kann der Ausführungsparameter einen relativen Wert angeben, der beispielsweise angibt, zu welchem Anteil der entsprechende Ausführungsort die durch den Applikationsparameter vorgegebene Bedingung erfüllt.

In dem Verfahrensschritt des Bestimmens des optimalen Ausführungsparameters wird derjenige Ausführungsparameter bestimmt, der die durch den Applikationsparameter aufgestellt bzw. vorgegebene Bedingung am besten erfüllt. Dabei können insbesondere Ausführungsparameter, die einen Default-Wert angeben, nicht berücksichtigt werden.

In dem Verfahrensschritt des Bestimmens des optimalen Ausführungsortes kann dann derjenige Ausführungsort als der optimale Ausführungsort bestimmt werden, der den zuvor bestimmten optimalen Ausführungsparameter bereitgestellt hat.

Der Erfinder hat erkannt, dass die Auswahl des optimalen Ausführungsortes auch von applikationsspezifischen Vorgaben bzw. Bedingungen abhängig sein kann. Beispielsweise können für verschiedene Applikationen verschiedene Ausführungsorte als optimal bestimmt werden. Der Erfinder hat erkannt, dass dieses Problem durch Berücksichtigen von wenigstens einer applikationsspezifischen Bedingung gelöst werden kann. Der Erfinder hat erkannt, dass dafür bezüglich der bereitgestellten Ausführungsparameter ein, die Bedingung vorgebender Applikationsparameter bereitgestellt werden kann.

Nach einem weiteren Aspekt der Erfindung umfasst das Verfahren außerdem einen Verfahrensschritt eines Ausführens der Applikation an der optimalen Ausführungsort.

Dabei kann das Ausführen der Applikation insbesondere durch das Bereitstellen des optimalen Ausführungsortes initiiert bzw. gestartet werden. Insbesondere kann das Ausführen der Applikation manuell oder automatisch an dem optimalen Ausführungsort initiiert werden.

In Ausführungen der Erfindung, wenn die Applikation auf Daten angewendet werden soll, kann das Ausführen der Applikation ein Übertragen der Daten, auf die die Applikation angewendet werden soll, an den optimalen Ausführungsort umfassen. Insbesondere kann dann die Applikation am Ausführungsort auf die Daten angewendet werden bzw. kann die Daten verarbeiten.

Der Erfinder hat erkannt, dass zum Ausführen der Applikation keine manuelle Auswahl des Ausführungsortes mehr notwendig ist. Auf diese Weise kann sofort, ohne Zeitverzögerung, wenn der optimale Ausführungsort bestimmt wurde, die Applikation an dem optimalen Ausführungsort gestartet werden. Der Erfinder hat erkannt, dass auf diese Weise Applikationen automatisiert auf verschiedenen Ausführungsorte verteilt werden können, sodass die verfügbaren Ressourcen der Ausführungsorte optimal genutzt werden können. Der Erfinder hat auch erkannt, dass alternativ die Applikation manuell durch einen Nutzer an dem optimalen Ausführungsort ausgeführt werden kann bzw. das Ausführen initiiert werden kann.

Nach einem weiteren Aspekt der Erfindung wird die Applikation in dem Verfahrensschritt des Ausführens der Applikation in einem Container an dem optimalen Ausführungsort ausgeführt.

Mit anderen Worten kann die Applikation unabhängig von der an dem optimalen Ausführungsort installierten Software in dem Container ausgeführt werden. Mit anderen Worten bietet der Container ein autarkes System, welches zum Ausführen der Applikation ausgebildet ist.

Insbesondere ist die Applikation bzw. eine zum Ausführen der Applikation notwendige Software nicht notwendigerweise an dem optimalen Ausführungsort installiert.

Der Erfinder hat erkannt, dass durch das Ausführen in einem Container verhindert werden kann, dass an jedem möglichen Ausführungsort die Applikation bzw. die zum Ausführen der Applikation notwendige Software installiert sein muss. Auf diese Weise kann eine Flexibilität beim Ausführen der Applikation und bei der Nutzung der Ausführungsorte gewährleistet werden.

Nach einem weiteren Aspekt der Erfindung gibt der wenigstens eine Applikationsparameter eine Bedingung bezüglich einer der folgenden Eigenschaften vor: Datenzugriffsgeschwindigkeit, Netzwerkgeschwindigkeit, Speicherort von Daten, Datenmenge, aktuelle und/oder vorhergesagte Ressourcenverfügbarkeit, Kosten der Ausführung und/oder der Datenspeicherung, Datensicherheitsanforderungen, Performanceanforderungen, Latenz. Dabei umfassen die Ausführungsparameter einen konkreten Wert für die durch den entsprechenden Applikationsparameter vorgegebene Bedingung.

Die Liste ist dabei nicht als abschließend zu verstehen. Alternativ kann der wenigstens eine Applikationsparameter eine Bedingung bezüglich einer nicht von der Liste umfassen Eigenschaft vorgeben.

Die Datenzugriffsgeschwindigkeit ist insbesondere relevant, wenn die Applikation auf Daten angewendet wird. Dabei gibt die Datenzugriffsgeschwindigkeit an, wie schnell von einem Ausführungsort auf den Ort, an dem Daten erfasst und/oder gespeichert werden, zugegriffen werden kann. Mit anderen Worten kann die Datenzugriffsgeschwindigkeit angeben, wie schnell die Daten an den Ausführungsort übertragen werden können. Dabei kann der Applikationsparameter eine minimale Datenzugriffsgeschwindigkeit als Bedingung vorgeben. Alternativ kann der Applikationsparameter eine maximale Zeitdauer zum Übertragen der Daten vorgeben, aus welcher dann gemeinsam mit der zu erwartenden Datenmenge die minimale Datenzugriffsgeschwindigkeit bestimmt werden kann.

Die Netzwerkgeschwindigkeit gibt an, wie schnell eine Verbindung zwischen einer Nutzerschnittstelle, an der ein Nutzer beispielsweise das Ergebnis der Applikation einsehen kann, und dem Ausführungsort ist. Der Applikationsparameter kann dann als Bedingung eine minimale Netzwerkgeschwindigkeit oder eine maximale Zeitdauer bis zum Bereitstellen des Ergebnisses angeben.

Der Speicherort der Daten ist insbesondere relevant, wenn die Applikation auf Daten angewendet wird. Der Speicherort der Daten gibt an, wo die Daten, auf die die Applikation angewendet werden soll, hinterlegt bzw. gespeichert sind. Mit anderen Worten gibt der Speicherort an, von wo aus die Daten zum Anwenden der Applikation an den Ausführungsort übertragen werden müssen. Dieser Applikationsparameter kann insbesondere mit der Datenzugriffsgeschwindigkeit in Kombination ausgewertet werden.

Die Datenmenge ist insbesondere relevant, wenn die Applikation auf Daten angewendet wird. Die Datenmenge gibt an, wie viele Daten an dann Ausführungsort übertragen werden müssen. Die Datenmenge kann dabei in einem typischen Format für eine Datengröße, beispielsweise in Byte, angegeben werden. Dieser Applikationsparameter kann insbesondere mit der Datenzugriffsgeschwindigkeit in Kombination ausgewertet werden.

Die vorhergesagte und/oder aktuelle Ressourcenverfügbarkeit gibt an, welche Rechenleistung bzw. Rechenkapazität an einem Ausführungsort zu einem bestimmten zukünftigen Zeitpunkt und/oder aktuell zu Verfügung stehen. Dabei kann der zukünftige Zeitpunkt dem Zeitpunkt entsprechen, an dem die Applikation voraussichtlich ausgeführt werden soll. Dabei kann der Applikationsparameter als Bedingung eine minimal benötigte Rechenleistung bzw. Rechenkapazität angeben.

Die Kosten der Ausführung gibt die Kosten der Nutzung eines Ausführungsortes an. Dabei kann der Applikationsparameter beispielsweise eine maximale Kostengrenze als Bedingung angeben. Die Kosten können dabei in Abhängigkeit der benötigten bzw. genutzten Rechenleistung und/oder in Abhängigkeit der zum Ausführen der Applikation benötigten Zeit bestimmt werden.

Die Kosten der Datenspeicherung kann insbesondere angeben, wie viel die Datenspeicherung der Daten, auf die die Applikation angewendet werden soll, an dem Ausführungsort während des Anwendens der Applikation kostet. Dabei können die Kosten auf eine benötigte Zeitdauer zum Ausführen der Applikation bezogen sein. Der Applikationsparameter kann dabei eine maximale Kostengrenze zum Speichern der Daten vorgeben.

Die Datensicherheitsanforderungen sind insbesondere relevant, wenn die Applikation auf Daten angewendet wird. Die Datensicherheitsanforderungen geben insbesondere an, welche Sicherheitsanforderungen ein Ausführungsort erfüllen muss, an den die Daten zum Anwenden der Applikation übertragen werden. Beispielsweise kann der Applikationsparameter für die Datensicherheitsanforderungen vorgeben, dass der Ausführungsort innerhalb einer bestimmten räumlichen Grenze, beispielsweise innerhalb eines bestimmten Landes oder eines bestimmten Länderverbundes, angeordnet ist. Alternativ oder zusätzlich kann der Applikationsparameter für die Datensicherheit andere sicherheitsrelevante Vorgaben bzw. Bedingungen wie beispielsweise Schutz vor Datenabgriff etc. angeben.

Die Performanceanforderung kann eine allgemein benötigte Anforderung an die Performance des Ausführungsortes vorgeben. Die Performance kann dabei wenigstens indirekt angeben, wie schnell die Daten verarbeitet werden können.

Die Latenz kann eine maximale Verzögerung, die beispielsweise durch das Übermitteln der Daten von dem Ort, an dem sie erfasst werden und/oder gespeichert werden zu dem Ausführungsort angeben. Alternativ oder zusätzlich kann die Latenz eine maximal benötigte Zeit zum Ausführen der Applikation angeben. Alternativ oder zusätzlich kann die Latenz eine maximal benötigte Zeit bis zum Bereitstellen eines mit der Applikation bestimmten Ergebnisses vorgeben.

Die von den verfügbaren Ausführungsorten bereitgestellten Ausführungsparameter geben dabei konkrete Werte an, die mit der durch den entsprechenden Applikationsparameter vorgegebenen Bedingung in Bezug auf einen der oben genannten konkreten Ausbildungen der Ausführungsparameter, verglichen werden können. Insbesondere können diese konkreten Werte wie oben beschrieben absolut oder relativ sein.

Der Erfinder hat erkannt, dass eine Vielzahl von Eigenschaften der Ausführungsorte beim Bestimmen des optimalen Ausführungsortes berücksichtigt werden können. Der Erfinder hat erkannt, dass insbesondere für verschiedenen Applikationen verschiedenen Applikationsparameter und Ausführungsparameter berücksichtigt werden können.

Nach einem weiteren Aspekt der Erfindung wird in dem Verfahrensschritt des Bereitstellens des wenigstens einen Applikationsparameters mehr als ein Applikationsparameter bereitgestellt. Dabei wird in dem Verfahrensschritt des Bestimmens von verfügbaren Ausführungsorten von den verfügbaren Ausführungsorten für jeden bereitgestellten Applikationsparameter ein entsprechender Ausführungsparameter bereitgestellt.

Mit anderen Worten kann von der Applikation durch die bereitgestellten Applikationsparameter mehr als eine Bedingung vorgegeben werden, die bei der Wahl des optimalen Ausführungsortes berücksichtigt werden soll. Insbesondere können die Applikationsparameter miteinander in Zusammenhang stehen.

Von jedem verfügbaren Ausführungsort kann dann für jeden bereitgestellten Applikationsparameter ein entsprechender Ausführungsparameter bereitgestellt werden, der für den Applikationsparameter einen konkreten absoluten oder relativen technischen Wert für den entsprechenden Ausführungsort angibt.

Wenn für einen oder mehrere Ausführungsorte für einen oder mehrere Applikationsparameter kein konkreter technischer Wert als Ausführungsparameter bereitgestellt werden kann, wird stattdessen ein Default-Wert, beispielsweise ein NaN Wert, als Ausführungsparameter bereitgestellt.

Der Erfinder hat erkannt, dass häufig mehr als ein Applikationsparameter bei der Auswahl des optimalen Ausführungsortes berücksichtigt werden muss. Der Erfinder hat erkannt, dass auf diese Weise verschiedenen Aspekte beim Bestimmen des optimalen Ausführungsortes berücksichtigt werden können. Der Erfinder hat erkannt, dass auf diese Weise beispielsweise sowohl kostenrelevante Aspekte, wie beispielsweise die Kosten für das Ausführen der Applikation an einem Ausführungsort, und zeitrelevante Aspekte, wie beispielsweise die Performance eines Ausführungsortes, gleichermaßen berücksichtigt werden können beim Bestimmen des optimalen Ausführungsortes.

Nach einem weiteren Aspekt der Erfindung ist den Applikationsparametern jeweils ein Wichtungsfaktor zugeordnet. Dabei wird in dem Verfahrensschritt des Bestimmens des optimalen Ausführungsortes das Erfüllen der durch die Applikationsparameter vorgegebenen Bedingung durch die von den Ausführungsorten bereitgestellten Ausführungsparameter gemäß den Wichtungsfaktoren der Applikationsparameter berücksichtigt.

Jedem Applikationsparameter ist somit ein Wichtungsfaktor zugeordnet. Die Wichtungsfaktoren sind dabei derart ausgebildet, dass sie untereinander vergleichbar sind. Beispielsweise können die Wichtungsfaktoren eine Relevanz des Applikationsparameters auf einer Skala zwischen 0 und 1 angeben. Dabei kann 0 bedeuten, dass der dem Wichtungsfaktor zugeordnete Applikationsparameter nicht berücksichtigt werden soll bzw. nicht relevant ist. Dabei kann 1 bedeuten, dass der dem Wichtungsfaktor zugeordnete Applikationsparameter maximal berücksichtigt werden soll bzw. maximal relevant ist. Zwei Applikationsparameter, deren Wichtungsfaktoren gleich bzw. identisch sind, werden gleichermaßen beim Bestimmen des optimalen Ausführungsortes berücksichtigt.

Beim Bestimmen des optimalen Ausführungsortes wird dann sowohl berücksichtigt, welcher Ausführungsort basierend auf den von ihm bereitgestellten Ausführungsparametern die von den Applikationsparametern vorgegebenen Bedingungen am besten erfüllt. Zusätzlich wird dabei anhand der Wichtungsfaktoren berücksichtigt, wie relevant die Applikationsparameter bzw. die durch die Applikationsparameter vorgegebenen Bedingungen tatsächlich für das Bestimmen des optimalen Ausführungsortes sind.

Auf diese Weise kann beispielsweise vorgegeben werden, dass der Applikationsparameter, der die maximalen Kosten für das Ausführen der Applikation an einem Ausführungsort vorgibt, weniger stark gewichtet wird als der Applikationsparameter, der die Datenübertragungsrate vorgibt. In diesem Beispiel kann also durch die entsprechende Wahl der Wichtungsfaktoren vorgegeben werden, dass die Kosten beim Bestimmen des optimalen Ausführungsortes eine geringere Rolle spielen als die Zeit, die für das Ausführen der Applikation benötigt wird. Beliebige alternative Beispiele sind selbstverständlich denkbar.

Der Erfinder hat erkannt, dass anhand der Wichtungsfaktoren vorgegeben werden kann, welcher Applikationsparameter bzw. welche Bedingung wie stark beim Bestimmen des optimalen Ausführungsortes berücksichtigt werden soll. Der Erfinder hat erkannt, dass bei manchen Applikationen verschiedene Eigenschaften und damit verschiedene durch die Applikationsparameter vorgegebenen Bedingungen unterschiedlich stark gewichtet werden sollen. Somit können beispielsweise die anfallenden Kosten durch das Ausführen der Applikation bei einer Applikation stärker berücksichtigt werden sollen als bei einer anderen Applikation.

Nach einem weiteren Aspekt der Erfindung ist die Applikation zum Verarbeiten von Daten ausgebildet. Dabei hängen die Wichtungsfaktoren von den Daten, die mit der Applikation verarbeitet werden sollen, ab.

Die Applikation kann dabei beim Ausführen, wie oben beschrieben, auf die Daten angewendet werden. Mit anderen Worten kann die Applikation beim Ausführen die Daten verarbeiten. Dabei sind die Daten dabei die Eingangsdaten für die Applikation. Die Applikation bestimmt dabei ein Ergebnis in Abhängigkeit der Daten, auf die sie angewendet wird.

Die Wichtungsfaktoren, die den von der Applikation bereitgestellten Applikationsparametern zugeordnet werden, können dabei von den Daten abhängen, auf die die Applikation angewendet werden soll. Mit anderen Worten können also die Wichtungsfaktoren für dieselbe Applikation verschieden sein, abhängig davon, auf welche Daten die Applikation angewendet werden soll.

Die Wichtungsfaktoren können insbesondere manuell angepasst werden. Alternativ können die Wichtungsfaktoren automatisiert angepasst werden. Beispielsweise können die Wichtungsfaktoren in Abhängigkeit davon angepasst werden, mit welchem Gerät bzw. System die Daten erfasst werden. Alternativ oder zusätzlich können die Wichtungsfaktoren in Abhängigkeit davon angepasst werden, wo die Daten erfasst werden, beispielsweise in welcher Abteilung eines Klinikums.

Der Erfinder hat erkannt, dass die Bedingungen, unter welchen eine Applikation ausgeführt werden soll, von den Daten abhängen kann, auf die sie angewendet werden soll. Im medizinischen Umfeld sollen beispielsweise Kosten in einer Notfallsituation geringer gewichtet werden als bei einer Routineuntersuchung. Auf diese Weise kann beispielsweise sichergestellt werden, dass die Bilddaten eines Patienten mit Verdacht auf einen Schlaganfall schneller und unabhängig von den anfallenden Kosten durch Anwenden einer Applikation ausgewertet werden als beispielsweise die Bilddaten eines Patienten, die von dem Patienten im Zuge einer routinemäßigen Nachsorgeuntersuchung erfasst wurden. Dabei kann in beiden Fällen dieselbe Applikation beispielsweise zum Rekonstruieren der Bilddaten angewendet werden.

Nach einem weiteren Aspekt der Erfindung ist die Applikation zum Verarbeiten von Daten ausgebildet. Dabei hängt der wenigstens eine Applikationsparameter von den Daten, die mit der Applikation verarbeitet werden sollen, ab.

Mit anderen Worten hängt die von dem Applikationsparameter vorgegebene Bedingung von den Daten ab, die mit der Applikation verarbeitet werden sollen bzw. auf die die Applikation angewendet werden soll. Mit anderen Worten kann der Applikationsparameter zwar für verschiedene Daten denselben Ausführungsparameter betreffen bzw. eine Bedingung für denselben Ausführungsparameter vorgeben, dabei kann die Bedingung für verschiedene Daten verschieden sein. Beispielsweise kann eine durch den Applikationsparameter vorgegebene minimale Netzwerkgeschwindigkeit für verschiedene Daten verschieden sein. Der Applikationsparameter kann dabei manuell von einem Nutzer an die zu verarbeitenden Daten angepasst werden. Alternativ kann der Applikationsparameter automatisiert an die Daten angepasst werden. Beispielsweise kann der Applikationsparameter in Abhängigkeit einer Datengröße bzw. Datenmenge der zu verarbeitenden Daten und/oder in Abhängigkeit davon mit welchem Gerät bzw. System die Daten erfasst werden etc. angepasst werden.

Der Erfinder hat erkannt, dass durch das Anpassen des Applikationsparameters die verschiedenen Anforderungen von verschiedenen Daten berücksichtigt werden können. Beispielsweise kann berücksichtigt werden, dass größere Datenmengen zum Übertragen von dem Speicherort oder Erfassungsort zu dem Ausführungsort eine größere Bandbreite benötigen als kleinere Datenmengen, wenn beide Datenmengen in annähernd derselben Zeitdauer übertragen werden sollen. Insbesondere kann dann der entsprechende Applikationsparameter, der eine Bedingung für die Bandbreite vorgibt, derart an die Daten angepasst werden, dass alle Daten in einer maximal Zeitdauer übertragen werden können. Dabei wird berücksichtigt, dass für kleine Datenmengen keine unnötige große Bandbreite benötigt wird. Selbstverständlich können auch für andere Eigenschaften durch Anpassen der Applikationsparameter applikationsspezifische Bedingungen aufgestellt werden. Dabei kann beispielsweise berücksichtigt werden, in welchem Kontext die entsprechende Applikation typischerweise verwendet wird, beispielsweise in einer Notfallsituation oder in einer Routine

Nach einem weiteren Aspekt der Erfindung wird der Verfahrensschritt des Bestimmens der verfügbaren Ausführungsorte zu einem ersten Zeitpunkt durchgeführt. Dabei ist ein Verfahrensschritt eines Ausführens der Applikation an dem optimalen Ausführungsort zu einem zweiten Zeitpunkt geplant. Dabei liegt der erste Zeitpunkt zeitlich vor dem zweiten Zeitpunkt. Dabei umfasst der Verfahrensschritt des Bestimmens der verfügbaren Ausführungsorte für jeden Ausführungsort einen Verfahrensschritt eines Bestimmens des wenigstens einen Ausführungsparameters für den zweiten Zeitpunkt.

Der Verfahrensschritt des Bestimmens des wenigstens einen Ausführungsparameters für den zweiten Zeitpunkt wird somit für jeden verfügbaren Ausführungsort durchgeführt.

In dem Verfahrensschritt des Bestimmens des wenigstens einen Ausführungsparameter wird somit an dem ersten Zeitpunkt der Ausführungsparameter für den zweiten Zeitpunkt bestimmt. Mit anderen Worten wird der Ausführungsparameter zum ersten Zeitpunkt für den zweiten Zeitpunkt vorhergesagt. Insbesondere wird dabei für jeden verfügbaren Ausführungsort der Ausführungsparameter für den zweiten Zeitpunkt vorhergesagt.

Wenn der Ausführungsparameter von einem Ausführungsort für den zweiten Zeitpunkt nicht vorhergesagt werden kann, wird stattdessen ein Default-Wert, beispielsweise ein NaN Wert, für den Ausführungsparameter angegeben.

Der Verfahrensschritt des Ausführens der Applikation kann dabei wie oben beschrieben ausgebildet sein.

Der Erfinder hat erkannt, dass auf diese Weise das Ausführen der Applikation vorgeplant werden kann. Der Erfinder hat erkannt, dass auf diese Weise berücksichtigt werden kann, dass der Ausführungsparameter zeitlich variabel ausgebildet sein kann. Der Erfinder hat außerdem erkannt, dass auf diese Weise das Ausführen einer Mehrzahl von Applikationen auf den verschiedenen Ausführungsorten vorgeplant und optimiert werden kann. Der Erfinder hat erkannt, dass durch ein Vorwissen beispielsweise über eine Auslastung der optimale Ausführungsort bereits im Vorfeld bestimmt werden kann. Der Erfinder hat erkannt, dass auf diese Weise beispielsweise bei Verbünden, beispielsweise Klinikverbünden, über verschiedene Zeitzonen das Wissen über eine tageszeitabhängige Auslastung genutzt werden kann, um den optimalen Ausführungsort bereits im Vorfeld bestimmen zu können.

Nach einem weiteren Aspekt der Erfindung werden die Ausführungsparameter der verfügbaren Ausführungsorte für den zweiten Zeitpunkt für jeden Ausführungsort in dem Verfahrensschritt des Bestimmens des wenigstens einen Ausführungsparameters des Ausführungsortes durch Anwenden einer trainierten Funktion auf dem wenigstens einen Ausführungsparameter entsprechenden wenigstens einen Ausführungsparameter aus der Vergangenheit bestimmt.

In dem Verfahrensschritt des Anwendens der trainierten Funktion werden mittels der ersten trainierten Funktion basierend auf den Eingangsdaten die Ausgangsdaten erzeugt.

Im Allgemeinen ahmt eine trainierte Funktion kognitive Funktionen nach, die Menschen mit menschlichem Denken verbinden. Insbesondere durch auf Trainingsdaten basierendem Training kann sich die trainierte Funktion an neue Umstände anpassen sowie Muster erkennen und extrapolieren.

Im Allgemeinen können Parameter einer trainierten Funktion mittels Trainings angepasst werden. Insbesondere kann dafür ein beaufsichtigtes (supervised) Training, ein halbüberwachtes (semi-supervised) Training, ein unbeaufsichtigtes (unsupervised) Training, ein verstärkendes Lernen (reinforcement learning) und/oder ein aktives Lernen (active learning) verwendet werden. Darüber hinaus kann Repräsentationslernen (ein alternativer Begriff ist "Merkmalslernen") (representation learning bzw. feature learning) verwendet werden. Insbesondere können die Parameter der trainierten Funktionen durch mehrere Trainingsschritte iterativ angepasst werden.

Insbesondere kann eine trainierte Funktion ein neuronales Netzwerk, eine Unterstützungsvektormaschine (support vector machine), einen Zufallsbaum bzw. einen Entscheidungsbaum (decision tree) und/oder ein Bayes'sches Netzwerk umfassen, und/oder die trainierte Funktion kann auf k-Mittel-Clustering (k-means clustering), Q-Learning, genetischen Algorithmen und/oder Assoziationsregeln basieren. Insbesondere kann eine trainierte Funktion eine Kombination aus mehreren unkorrelierten Entscheidungsbäumen bzw. ein Ensemble aus Entscheidungsbäumen (random forest) umfassen. Insbesondere kann die trainierte Funktion mittels XGBoosting (eXtreme Gradient Boosting) bestimmt werden. Insbesondere kann ein neuronales Netzwerk ein tiefes neuronales Netzwerk (deep neural network), ein Faltungs-neuronales Netzwerk (convolutional neural network) oder ein Faltungs-tiefes neuronales Netzwerk (convolutional deep neural network) sein. Darüber hinaus kann ein neuronales Netzwerk ein kontradiktorisches Netzwerk (adversarial network), ein tiefes kontradiktorisches Netzwerk (deep adversarial network) und/oder ein generatives kontradiktorisches Netzwerk (generative adversarial network) sein. Insbesondere kann ein neuronales Netzwerk ein rekurrentes neuronales Netzwerk (recurrent neural network) sein. Insbesondere kann ein rekurrentes neuronales Netzwerk ein Netzwerk mit langem Kurzzeitgedächtnis (long-short-term-memory, LSTM), insbesondere eine Gated Recurrent Unit (GRU), sein. Insbesondere kann eine trainierte Funktion eine Kombination der beschriebenen Ansätze umfassen. Insbesondere werden die hier beschriebenen Ansätze für eine trainierte Funktion Netzwerkarchitektur der trainierten Funktion genannt.

Wie oben beschrieben wird der Verfahrensschritt des Bestimmens des wenigstens einen Ausführungsparameters für den zweiten Zeitpunkt für die verfügbaren Ausführungsorte einzeln bzw. getrennt bzw. unabhängig voneinander ausgeführt. Im Folgenden ist der Verfahrensschritt für einen Ausführungsort beschrieben. Dabei ist der Verfahrensschritt für die anderen Ausführungsorte analog ausgebildet. Dabei kann die trainierte Funktion für jeden Ausführungsort speziell angepasst bzw. trainiert sein. Mit anderen Worten kann für jeden Ausführungsort eine individuelle trainierte Funktion angewendet werden.

In dem Verfahrensschritt des Bestimmens des wenigstens einen Ausführungsparameters für den zweiten Zeitpunkt wird die trainierte Funktion auf einen oder mehrere Ausführungsparameter aus der Vergangenheit angewendet. Basierend auf dem oder den Ausführungsparameter aus der Vergangenheit wird der Ausführungsparameter für den zweiten Zeitpunkt bestimmt. "Aus der Vergangenheit" bedeutet, dass der oder die Ausführungsparameter vor oder zu dem ersten Zeitpunkt bestimmt bzw. erfasst wurden. Insbesondere kann ein zeitlicher Verlauf des Ausführungsparameters für den Ausführungsort bis zu dem ersten Zeitpunkt erfasst worden sein. Dafür kann in spezifischen Zeitintervallen der Ausführungsparameter bis zu dem ersten Zeitpunkt erfasst bzw. bestimmt bzw. abgelesen werden. Die Ausführungsparameter der Vergangenheit betreffen dabei dieselbe Eigenschaft des Ausführungsortes wie der Ausführungsparameter, der für den zweiten Zeitpunkt bestimmt werden soll. Durch Anwenden der trainierten Funktion auf den oder die Ausführungsparameter aus der Vergangenheit, kann der Ausführungsparameter für den zweiten Zeitpunkt bestimmt werden.

Der Erfinder hat erkannt, dass mit Hilfe einer trainierten Funktion für einen Ausführungsort der Ausführungsparameter für den zweiten Zeitpunkt vorhergesagt werden kann. Der Erfinder hat erkannt, dass dabei basierend auf Informationen aus der Vergangenheit eine Information über die Zukunft, also über den zweiten Zeitpunkt abgeleitet werden kann.

Nach einem weiteren Aspekt der Erfindung werden die Ausführungsparameter der verfügbaren Ausführungsorte für den zweiten Zeitpunkt für jeden Ausführungsort in dem Verfahrensschritt des Bestimmens des wenigstens einen Ausführungsparameters des Ausführungsortes durch Anwenden einer trainierten Funktion auf dem wenigstens einen Ausführungsparameter entsprechenden wenigstens einen Ausführungsparameter aus der Vergangenheit und eine Information bezüglich einem Ausführen anderer Applikationen zu dem zweiten Zeitpunkt an den verfügbaren Ausführungsorten bestimmt.

Die trainierte Funktion kann dabei wie allgemein oben beschrieben ausgebildet sein.

Insbesondere ist das Anwenden der trainierten Funktion hauptsächlich wie oben beschrieben ausgebildet. Im Unterschied zu der obigen Beschreibung wird die trainierte Funktion zusätzlich auf eine Information bezüglich einem Ausführen anderer Applikationen an den verfügbaren Ausführungsorten zu dem zweiten Zeitpunkt angewendet. Die Information kann dabei angeben, welche Applikationen an welchem verfügbaren Ausführungsort zu dem zweiten Zeitpunkt ausgeführt werden sollen und welche Rechenleistung von den anderen Applikationen beim Ausführen genutzt bzw. gebraucht werden.

Der Erfinder hat erkannt, dass auf diese Weise bereits "verplante" Rechenkapazitäten bzw. Rechenleistungen berücksichtigt werden können. Mit anderen Worten hat der Erfinder erkannt, dass eine bereits existierende Planung für den zweiten Zeitpunkt berücksichtigt werden kann. Der Erfinder hat erkannt, dass auf diese Weise bereits bekannte Einflüsse auf die Ausführungsparameter zum zweiten Zeitpunkt berücksichtigt werden können.

Nach einem weiteren Aspekt der Erfindung ist die Applikation zum Verarbeiten von Daten ausgebildet. Dabei werden die Daten zu einem Dritten Zeitpunkt erfasst. Dabei liegt der dritte Zeitpunkt zeitlich vor dem zweiten Zeitpunkt. Dabei liegt der erste Zeitpunkt vor dem dritten Zeitpunkt. Oder dabei ist der erste Zeitpunkt gleich dem dritten Zeitpunkt. Dabei werden die Daten beim Erfassen direkt an den optimalen Ausführungsort versendet.

Die Applikation kann dabei dazu ausgebildet sein, die Daten wie oben beschrieben zu verarbeiten. Insbesondere kann die Applikation dabei dazu ausgebildet sein, wie oben beschrieben auf die Daten angewendet zu werden. Die Daten können dabei wie oben beschrieben ausgebildet sein.

Der dritte Zeitpunkt, an dem die Daten erfasst werden, liegt vorteilhafterweise zwischen dem ersten und dem zweiten Zeitpunkt oder ist gleich dem ersten Zeitpunkt. Insbesondere sind somit am dritten Zeitpunkt die Ausführungsparameter für den zweiten Zeitpunkt für die verfügbaren Ausführungsorte bereits bestimmt bzw. vorhergesagt. Insbesondere kann somit bereits der optimale Ausführungsort bestimmt sein. Mit anderen Worten ist beim Erfassen der Daten zum dritten Zeitpunkt bereits bekannt, was der optimale Ausführungsort ist. Somit ist bereits bekannt, an welchem Ausführungsort der verfügbaren Ausführungsorte die Applikation auf die Daten angewendet werden soll. Somit können die Daten direkt beim Erfassen an den optimalen Ausführungsort versendet bzw. übertragen werden. Insbesondere sind dann die Daten vorteilhafterweise bereits zum zweiten Zeitpunkt an dem optimalen Ausführungsort verfügbar und die Applikation kann direkt auf die Daten angewendet werden bzw. die Applikation kann die Daten direkt verarbeiten.

Der Erfinder hat erkannt, dass durch das vorausschauende Versenden bzw. Übermitteln der Daten Zeit eingespart werden kann. Insbesondere kann bereits während des Übertragens ein Teil der Daten übermittelt bzw. versendet werden. Auf diese Weise kann sichergestellt werden, dass direkt zum geplanten zweiten Zeitpunkt mit der Verarbeitung der Daten durch Anwenden der Applikation auf die Daten begonnen werden kann. Der Erfinder hat erkannt, dass dies insbesondere dann möglich ist, wenn die Ausführungsparameter der Ausführungsorte für den zweiten Zeitpunkt vorhergesagt werden, sodass bereits zum Zeitpunkt des Erfassens der Daten bekannt ist, welcher Ausführungsort der optimale Ausführungsort ist und die Daten direkt beim Erfassen entsprechend übertragen bzw. versendet werden können.

Nach einem weiteren Aspekt der Erfindung ist die Applikation eine medizinische Applikation.

Insbesondere ist die Applikation eine Applikation aus dem medizinischen Umfeld. Beispielsweise kann die Applikation eine Applikation in der Bildgebung, in der Labordiagnostik, in der Therapie, in der Strahlentherapie etc. sein.

Beispielsweise kann die Applikation eine Applikation zur Rekonstruktion und/oder Verarbeitung und/oder Analyse von Bilddaten, insbesondere von medizinischen Bilddaten sein.

Alternativ kann die Applikation eine Applikation zur Analyse bzw. Auswertung von Labordaten sein. Mit anderen Worten kann die Applikation dazu ausgebildet sein, Labordaten zu analysieren und in Ausführungen eine Diagnose basierend auf den Labordaten zu erstellen.

Alternativ kann die Applikation für die Therapieplanung ausgebildet sein. Dabei kann die Applikation dazu ausgebildet sein, auf Patientendaten und/oder bereits durchgeführte Untersuchungen bzw. Interventionen an einem Patienten und/oder auf bereits bestehende Diagnosen etc. angewendet zu werden. Dabei kann die Applikation beispielsweise einen Therapievorschlag, also insbesondere einen Vorschlag bezüglich des weiteren Vorgehens in Bezug auf eine weitere Behandlung des Patienten ausgeben.

Alternativ kann die Applikation für eine Strahlentherapieplanung ausgebildet sein. Dabei kann die Applikation dazu ausgebildet sein, einen Bestrahlungsplan zu bestimmen. Dabei kann die Applikation auf Bilddaten eines Patienten angewendet werden. Basierend auf den Bilddaten kann die Applikation einen auf den Patienten angepassten Bestrahlungsplan bestimmen.

Viele weitere alternative oder ergänzende Applikationen in dem medizinischen Umfeld sind denkbar.

Der Erfinder hat erkannt, dass das beschriebene Verfahren insbesondere im medizinischen Umfeld besonders geeignet ist. Der Erfinder hat erkannt, dass dort ein großer Zeitdruck besteht, Daten zeitnah auszuwerten. Der Erfinder hat erkannt, dass dies mit dem beschriebenen Verfahren optimiert werden kann.

Nach einem weiteren Aspekt der Erfindung können die verfügbaren Ausführungsorte Orten aus der folgenden Liste entsprechen: ein Cloud-System, ein Edge-System, ein lokaler Rechner, eine Modalität, ein lokales oder zentrales Rechenzentrum.

Die Liste ist dabei nicht als abschließend anzusehen. Die Ausführungsorte können auch alternative Ausprägungen aufweisen.

Die Modalität kann dabei insbesondere ein Gerät bzw. System bzw. medizintechnischen Gerät sein, mit dem die oben beschriebenen Daten erfasst werden. Die Modalität kann beispielsweise ein Computer-Tomographie-Gerät oder ein Magnet-Resonanz-Tomographie-Gerät oder ein Röntgengerät oder ein C-Bogen-Gerät oder ein Mammographiegerät oder ein Positronen-Emissions-Tomographie-Gerät oder ein Einzelphotonen-Emissions-Computer-Tomographie-Gerät oder ein Labordiagnosesystem etc. sein.

Der Erfinder hat erkannt, dass eine Vielzahl an verschiedenen möglichen Ausführungsorten für das Ausführen der Applikation genutzt werden können. Der Erfinder hat erkannt, dass alle möglichen verfügbaren Rechenkapazitäten zusammengeführt und genutzt werden können. Der Erfinder hat erkannt, dass auf diese Weise die verfügbaren Rechenkapazitäten optimal ausgenutzt werden können. Der Erfinder hat erkannt, dass mit dem oben beschriebenen Verfahren auch bei der Vielzahl von möglichen bzw. verfügbaren Ausführungsorten sichergestellt werden kann, dass nur die beispielsweise bezüglich Datensicherheit geeigneten Ausführungsorte zum Ausführen der Applikation in Betracht gezogen werden.

Nach einem weiteren Aspekt der Erfindung erhält ein Nutzer nach dem Bestimmen des optimalen Ausführungsortes Zugriff auf den optimalen Ausführungsort zu Ausführen der Applikation.

Insbesondere kann der Nutzer dann das oben beschriebene Ausführen der Applikation steuern. Mit anderen Worten kann der

Nutzer das Ausführen der Applikation initiieren bzw. starten. Insbesondere kann der Nutzer auf dem optimalen Ausführungsort angeben, welche Daten die Applikation verarbeiten soll bzw. auf welche Daten die Applikation angewendet werden soll.

Der Erfinder hat erkannt, dass einem Nutzer durch den Zugriff auf den optimalen Ausführungsort die Möglichkeit gegeben wird in das Ausführen der Applikation einzugreifen und dieses zu steuern. Der Erfinder hat außerdem erkannt, dass ein gezielter Zugriff nur auf den optimalen Ausführungsort gewährt werden kann. Der Erfinder hat erkannt, dass auf diese Weise ein Missbrauch durch unnötige Zugriffsgenehmigungen verhindert werden kann.

Die Erfindung betrifft optional außerdem ein computerimplementiertes Verfahren zum Bereitstellen einer trainierten Funktion. Das Verfahren umfasst einen Verfahrensschritt eines Empfangens von Trainings-Eingangsdaten, wobei die Trainings-Eingangsdaten wenigstens einen Trainings-Ausführungsparameter vor einem Zeitpunkt vor einem zweiten Trainings-Zeitpunkt umfassen. Das Verfahren umfasst außerdem einen Verfahrensschritt eines Empfangens von Trainings-Ausgangsdaten, wobei die Trainings-Ausgangsdaten wenigstens einen tatsächlichen Trainings-Ausführungsparameter zu dem zweiten Trainings-Zeitpunkt umfassen. Wobei die Trainings-Eingangsdaten und die Trainings-Ausgangsdaten miteinander in Beziehung stehen. Das Verfahren umfasst außerdem einen Verfahrensschritt eines Trainierens einer Funktion basierend auf den Trainings-Eingangsdaten und den Trainings-Ausgangsdaten. Das Verfahren umfasst außerdem einen Verfahrensschritt eines Bereitstellens der trainierten Funktion.

Die Trainings-Eingangsdaten betreffen dabei insbesondere eine der oben beschriebenen Eigenschaften eines Ausführungsortes. Der Ausführungsort ist dabei wie oben beschrieben ausgebildet. Die Trainings-Eingangsdaten beschreiben dabei in Form eines Trainings-Ausführungsparameters die Eigenschaft vor dem zweiten Trainings-Zeitpunkt. Dabei können die Trainings-Eingangsdaten einen Trainings-Ausführungsparameter, der die Eigenschaft des Ausführungsortes vor dem zweiten Trainings-Zeitpunkt beschreibt umfassen. Alternativ können die Trainings-Eingangsdaten eine zeitliche Abfolge von Trainings-Ausführungsparametern umfassen, die einen zeitlichen Verlauf bzw. eine zeitliche Veränderung der Eigenschaft vor dem zweiten Trainings-Zeitpunkt beschreiben.

Die Trainings-Ausgangsdaten umfassen den tatsächlichen Trainings-Ausführungsparameter zum zweiten Trainings-Zeitpunkt.

Durch Anwenden der Funktion auf die Trainings-Eingangsdaten, werden vorläufige Trainings-Ausgangsdaten bestimmt, die einen vorläufigen Trainings-Ausführungsparameter zum zweiten Trainings-Zeitpunkt umfassen.

In dem Verfahrensschritt des Trainierens werden die empfangenen Trainings-Ausgangsdaten und die vorläufigen Trainings-Ausgangsdaten verglichen. In Abhängigkeit dieses Vergleichs wird wenigstens ein Parameter der Funktion derart angepasst, dass bei einem erneuten Anwenden der Funktion auf die Trainings-Eingangsdaten die neuen vorläufigen Trainings-Ausgangsdaten besser mit den empfangenen Trainings-Ausgangsdaten übereinstimmen.

Dieser Verfahrensschritt kann iterativ mehrfach durchgeführt werden, bis ein Abbruchkriterium erreicht ist. Insbesondere kann der Verfahrensschritt auf eine Vielzahl von Trainings-Eingangsdaten und Trainings-Ausgangsdaten angewendet werden.

Das Abbruchkriterium kann beispielsweise ein Überschreiten einer maximalen Anzahl von Iterationen sein. Alternativ oder zusätzlich kann das Abbruchkriterium ein Unterschreiten einer minimalen Abweichung zwischen den empfangenen Trainings-Ausgangsdaten und den vorläufigen Trainings-Ausgangsdaten sein.

Die Erfindung betrifft außerdem ein Bestimmungssystem zum Bestimmen eines optimalen Ausführungsortes einer Applikation umfassend eine Schnittstelle und eine Recheneinheit. Dabei ist die Schnittstelle und/oder die Recheneinheit zum Bestimmen von verfügbaren Ausführungsorten ausgebildet. Dabei ist die Schnittstelle dazu ausgebildet, von jedem der verfügbaren Ausführungsorte wenigstens einen Ausführungsparameter zu empfangen. Dabei ist der von einem verfügbaren Ausführungsort bereitgestellte wenigstens eine Ausführungsparameter dazu ausgebildet, eine Eignung des entsprechenden verfügbaren Ausführungsortes zu quantifizieren. Dabei ist die Recheneinheit außerdem zum Bestimmen des optimalen Ausführungsortes ausgebildet. Dabei ist der optimale Ausführungsort derjenige Ausführungsort, welcher gemäß der bereitgestellten Ausführungsparameter am besten zum Ausführen der Applikation geeignet ist. Dabei ist die Schnittstelle außerdem zum Bereitstellen des optimalen Ausführungsortes ausgebildet.

Eine solches Bestimmungssystem kann insbesondere dazu ausgebildet sein das zuvor beschriebene Verfahren zum Bestimmen eines optimalen Ausführungsortes einer Applikation und seine Aspekte auszuführen. Das Bestimmungssystem ist dazu ausgebildet dieses Verfahren und seine Aspekte auszuführen, indem die Schnittstelle und die Recheneinheit ausgebildet sind, die entsprechenden Verfahrensschritte auszuführen.

Die Erfindung betrifft auch ein Computerprogrammprodukt mit einem Computerprogramm sowie ein computerlesbares Medium. Eine weitgehend softwaremäßige Realisierung hat den Vorteil, dass auch schon bisher verwendete Bestimmungssysteme auf einfache Weise durch ein Software-Update nachgerüstet werden können, um auf die beschriebene Weise zu arbeiten. Ein solches Computerprogrammprodukt kann neben dem Computerprogramm gegebenenfalls zusätzliche Bestandteile wie z. B. eine Dokumentation und/oder zusätzliche Komponenten, sowie Hardware-Komponenten, wie z.B. Hardware-Schlüssel (Dongles etc.) zur Nutzung der Software, umfassen.

Insbesondere betrifft die Erfindung auch ein Computerprogrammprodukt mit einem Computerprogramm, welches direkt in einen Speicher eines Bestimmungssystems ladbar ist, mit Programmabschnitten, um alle Schritte des oben beschriebenen Verfahrens zum Bestimmen eines optimalen Ausführungsortes einer Applikation und seine Aspekte auszuführen, wenn die Programmabschnitte von dem Bestimmungssystem ausgeführt werden.

Insbesondere betrifft die Erfindung ein computerlesbares Speichermedium, auf welchem von einem Bestimmungssystem lesbare und ausführbare Programmabschnitte gespeichert sind, um alle Schritte des oben beschriebenen Verfahrens zum Bestimmen eines optimalen Ausführungsortes einer Applikation und seine Aspekte auszuführen, wenn die Programmabschnitte von dem Bestimmungssystem ausgeführt werden.

Die oben beschriebenen Eigenschaften, Merkmale und Vorteile dieser Erfindung werden klarer und verständlicher im Zusammenhang mit folgenden Figuren und ihren Beschreibungen. Dabei sollen die Figuren und Beschreibungen die Erfindung und ihre Ausführungsformen in keiner Weise einschränken.

In verschiedenen Figuren sind gleiche Komponenten mit korrespondierenden Bezugszeichen versehen. Die Figuren sind in der Regel nicht maßstabsgetreu.

Es zeigen
Fig. 1 ein erstes Ausführungsbeispiel eines Verfahrens zum Bestimmen eines optimalen Ausführungsortes einer Applikation,
Fig. 2 ein zweites Ausführungsbeispiel eines Verfahrens zum Bestimmen eines optimalen Ausführungsortes einer Applikation,
Fig. 3 ein drittes Ausführungsbeispiel eines Verfahrens zum Bestimmen eines optimalen Ausführungsortes einer Applikation,
Fig. 4 ein Bestimmungssystem zum Bestimmen eines optimalen Ausführungsortes einer Applikation,
Fig. 5 ein Beispiel eines Datenstroms beim Ausführen eines Verfahrens zum Bestimmen eines optimalen Ausführungsortes einer Applikation.

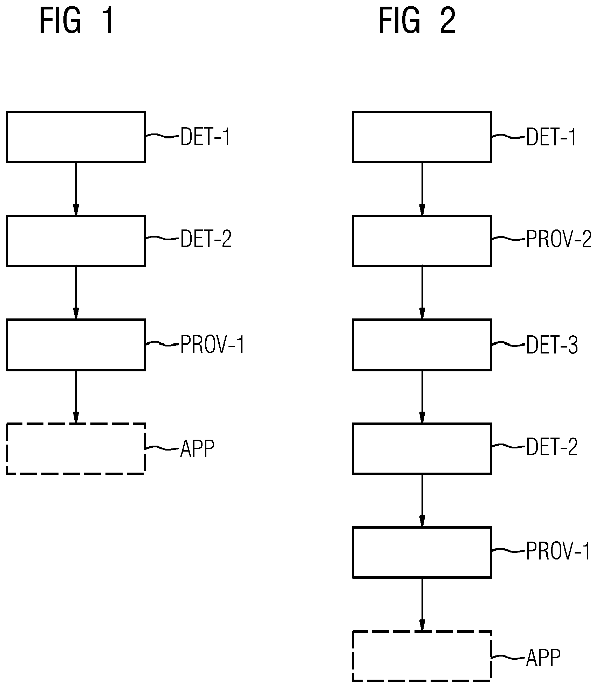

**Figur 1** zeigt ein erstes Ausführungsbeispiel eines Verfahrens zum Bestimmen eines optimalen Ausführungsortes einer Applikation.

In einem Verfahrensschritt eines Bestimmens DET-1 von verfügbaren Ausführungsorten, werden Ausführungsorte bestimmt, welche zur Ausführung der Applikation zu Verfügung stehen. Mit anderen Worten werden Ausführungsorte bestimmt, an welchen die Applikation ausgeführt werden kann.

Beim Bestimmen DET-1 von verfügbaren Ausführungsorten stellt jeder der verfügbaren Ausführungsorte wenigstens einen Ausführungsparameter bereit. Der Ausführungsparameter eines Ausführungsortes ist dabei dazu ausgebildet, den Ausführungsort zu charakterisieren bzw. den Ausführungsort zu beschreiben. Dabei ist der wenigstens eine Ausführungsparameter eines Ausführungsortes dazu ausgebildet, eine Eignung des entsprechenden verfügbaren Ausführungsortes zu quantifizieren.

Dabei sind die von den verschiedenen Ausführungsorten bereitgestellten Ausführungsparameter untereinander vergleichbar. Insbesondere wird durch den wenigstens einen Ausführungsparameter wenigstens eine Eigenschaft für alle Ausführungsorte beschrieben bzw. charakterisiert bzw. quantifiziert.

Wenn einer oder mehrere der verfügbaren Ausführungsorte keinen die entsprechende Eigenschaft beschreibenden Ausführungsparameter bereitstellen können, kann stattdessen für den Ausführungsparameter ein Default-Wert, beispielsweise ein NaN Wert, bereitgestellt werden.

In einem Verfahrensschritt eines Bestimmens DET-2 des optimalen Ausführungsortes wird der optimale Ausführungsort in Abhängigkeit der bereitgestellten Ausführungsparameter bestimmt. Dabei ist der optimale Ausführungsort der Ausführungsort der verfügbaren Ausführungsorte, welcher gemäß den bereitgestellten Applikationsparametern am besten zum Ausführen der Applikation geeignet ist.

In einem Verfahrensschritt eines Bereitstellens PROV-1 des optimalen Ausführungsortes wird eine Information darüber bereitgestellt, welcher Ausführungsort als der optimale Ausführungsort bestimmt wurde. Dabei kann die Information derart ausgebildet sein, dass ein Nutzer darüber informiert wird, welcher der optimale Ausführungsort ist. Alternativ oder zusätzlich kann die Information derart ausgebildet sein, dass die Applikation basierend auf der Information automatisiert am optimalen Ausführungsort ausgeführt wird.

In einem optionalen Verfahrensschritt eines Ausführens APP der Applikation wird die Applikation an dem optimalen Ausführungsort ausgeführt. Dabei kann die Applikation manuell, durch eine Nutzereingabe ausgeführt werden. Mit anderen Worten kann das Ausführen APP der Applikation manuell durch eine Nutzereingabe gestartet bzw. initiiert werden. Alternativ kann die Applikation automatisch an dem optimalen Ausführungsort ausgeführt werden. Mit anderen Worten kann alternativ das Ausführen APP der Applikation automatisch an dem optimalen Ausführungsort gestartet bzw. initiiert werden.

In Ausführungen der Erfindung ist die Applikation beim Ausführen dazu ausgebildet, auf Daten angewendet zu werden. Mit anderen Worten kann die Applikation zum Verarbeiten von Daten beim Ausführen ausgebildet sein. Dabei kann durch Ausführen der Applikation in Abhängigkeit der Daten ein Ergebnis generiert werden.

In Ausführungen der Erfindung kann die Applikation in dem Verfahrensschritt des Ausführens APP der Applikation in einem Container an dem optimalen Ausführungsort ausgeführt werden. Dabei kann die Applikation in dem Container ausgeführt werden, ohne dass sie an dem optimalen Ausführungsort direkt installiert sein muss. Mit anderen Worten kann die Applikation an dem optimalen Ausführungsort unabhängig von der dort installierten Software und/oder Betriebssystem in dem Container ausgeführt werden.

In Ausführungen der Erfindung ist die Applikation eine medizinische Applikation. Eine medizinische Applikation kann dabei beispielsweise eine Applikation in der Bildgebung und/oder on der Labordiagnostik und/oder in der Therapie und/oder in der Strahlentherapie sein. Somit kann die Applikation beispielsweise zum Rekonstruieren und/oder Analysieren von in einem medizinischen Kontext erfassten Bilddaten ausgebildet sein. Alternativ kann die Applikation dazu ausgebildet sein, Labordaten zu analysieren und beispielsweise basierend auf den Labordaten eine Diagnose zu erstellen oder weitere Untersuchungen zu empfehlen. Labordaten können beispielsweise eine Analyse von Körperflüssigkeiten oder anderen Körpereigenschaften eines Patienten umfassen. Alternativ kann die Applikation dazu ausgebildet sein, bei einer Therapieplanung für einen Patienten zu unterstützen. Dafür kann die Applikation beispielsweise dazu ausgebildet sein, Patientendaten und/oder bereits erfasste Bilddaten und/oder Labordaten zu analysieren und Vorschläge über einer weitere Behandlung und/oder Untersuchung zu generieren. Alternativ kann die Applikation dazu ausgebildet sein, einen Bestrahlungsplan für einen Patienten zu bestimmen. Dafür kann die Applikation auf Bilddaten des Patienten angewendet werden.

Wie in der Beschreibung deutlich wird, können die Daten, auf die die Applikation angewendet werden kann somit verschieden ausgebildet sein. Insbesondere können verschiedene Applikationen auf verschiedene Daten angewendet werden. Beispielsweise können die Daten Bilddaten, Labordaten, Patientendaten etc. sein.

In Ausführungen der Erfindung können die in dem Verfahrensschritt des Bereitstellens der verfügbaren Ausführungsorte bereitgestellten Ausführungsorte Orte aus folgender Liste sein: ein Cloud-System, ein Edge-System, ein lokaler Rechner, eine Modalität, ein lokales oder zentrales Rechenzentrum.

Die Modalität kann dabei das Gerät, insbesondere das medizintechnische Gerät, bzw. das System sein, mit welchem die Daten, auf die die Applikation angewendet werden soll bzw. die mit der Applikation verarbeitet werden sollen, erfasst werden können. Das medizintechnische Gerät kann beispielsweise eines aus der folgende Liste sein: ein Computer-Tomographie-Gerät, ein Röntgengerät, ein C-Bogen-Gerät, ein Mammographiegerät, ein Magnet-Resonanz-Tomographiegerät, ein Positronen-Emissions-Tomographie-Gerät, ein Einzelphotonen-Emissions-Computer-Tomographie-Gerät, ein Laborsystem etc. sein.

Das Edge-System kann dabei insbesondere innerhalb eines Netzwerkes angeordnet sein, in welchem auch die Daten erfasst und/oder gespeichert werden.

Das Cloud-System kann insbesondere von einem Cloud-Provider bereitgestellt werden. Dabei können verschiedene Cloud-Systeme von verschiedenen Cloud-Providern bereitgestellt werden. Die verschiedenen Cloud-Systeme von verschiedenen Cloud-Providern können sich dabei in ihren bereitgestellten Ausführungsparametern unterscheiden. Beispielsweise können die verschiedenen Cloud-Systeme unterschiedliche Kosten beim Ausführen der Applikation generieren.

In einer weiteren optionalen Ausführung der Erfindung erhält ein Nutzer nach dem Bestimmen DET-2 des optimalen Ausführungsortes Zugriff auf dem optimalen Ausführungsort zum Ausführen der Applikation. Durch den Zugriff kann der Nutzer das Ausführen der Applikation starten bzw. initiieren. Alternativ oder zusätzlich kann der Nutzer die Applikation überwachen. **Figur 2** zeigt ein zweites Ausführungsbeispiel eines Verfahrens zum Bestimmen eines optimalen Ausführungsortes einer Applikation.

Die Verfahrensschritte des Bestimmens DET-1 der verfügbaren Ausführungsorte, des Bestimmens DET-2 des optimalen Ausführungsortes und des Bereitstellens PROV-1 des optimalen Ausführungsortes sind analog zu der Beschreibung zu Figur 1 ausgebildet. Die optionalen Ausführungsbeispiele, die im Zusammenhang mit der Figur 1 beschrieben wurden, können auch auf das im Folgenden beschriebene zweite Ausführungsbeispiel übertragen werden.

In einem weiteren Verfahrensschritt eines Bereitstellens PROV-2 von wenigstens einem Applikationsparameter, wird wenigstens ein Applikationsparameter durch die Applikation bereitgestellt. Der Applikationsparameter gibt dabei eine Bedingung an, die von dem Ausführungsort, an dem die Applikation ausgeführt werden soll, erfüllt sein soll. Der Applikationsparameter gibt somit eine Bedingung für die Eigenschaft des optimalen Applikationsparameters an.

In dem Verfahrensschritt des Bestimmens DET-1 von verfügbaren Ausführungsorten stellt jeder der verfügbaren Ausführungsorte wenigstens einen dem Applikationsparameter entsprechenden Ausführungsparameter bereit. Mit anderen Worten stellt jeder der verfügbaren Ausführungsorte einen Ausführungsparameter bereit, der einen konkreten Wert für die durch den Applikationsparameter bedingte Eigenschaft des entsprechenden Ausführungsortes beschreibt bzw. quantifiziert. Der konkrete Wert kann dabei absolut oder relativ sein.

In einem Verfahrensschritt eines Bestimmens DET-3 eines optimalen Ausführungsparameters wird derjenige Ausführungsparameter aus den bereitgestellten Ausführungsparametern bestimmt, der die durch den Applikationsparameter vorgegebene Bedingung am besten erfüllt. Dabei werden diejenigen bereitgestellten Ausführungsparameter berücksichtigt, die dieselbe Eigenschaft der Ausführungsorte charakterisieren, wie der wenigstens eine Applikationsparameter.

Der in dem Verfahrensschritt des Bestimmens DET-2 des optimalen Ausführungsortes bestimmte optimale Ausführungsort, ist dann der Ausführungsort, der den optimalen Ausführungsparameter bereitgestellt hat.

In Ausführungen der Erfindung gibt der wenigstens eine Applikationsparameter eine Bedingung bezüglich einer der folgenden Eigenschaften vor: Datenzugriffsgeschwindigkeit, Netzwerkgeschwindigkeit, Speicherort von Daten, Datenmenge, aktuelle und/oder vorhergesagte Ressourcenverfügbarkeit, Kosten der Ausführung und/oder der Datenspeicherung, Datensicherheitsanforderungen, Performanceanforderungen, Latenz.

Die bereitgestellten Ausführungsparameter geben dann einen konkreten Wert für die durch den Applikationsparameter vorgegebene Bedingung an. Mit anderen Worten geben die bereitgestellten Ausführungsparameter einen konkreten Wert für die durch den Applikationsparameter bedingte Eigenschaft des jeweiligen Ausführungsortes an.

Dabei kann die Eigenschaft für einen Ausführungsort spezifisch sein, beispielsweise die Performance oder die Kosten. Andere Eigenschaften können dabei von den Ausführungsorten unabhängig sein, wie beispielsweise der Speicherort der Daten, auf die die Applikation angewendet werden soll. Diese Eigenschaften können in Kombination mit für einen Ausführungsort spezifische Eigenschaften weiterführende für den Ausführungsort spezifische Informationen bereitstellen. Beispielsweise kann aus dem Speicherort der Daten und der für einen Ausführungsort spezifischen Datenzugriffsgeschwindigkeit abgeleitet werden, wie schnell die Daten an den Ausführungsort übertragen werden können.

In Ausführungen der Erfindung wird in dem Verfahrensschritt des Bereitstellens PROV-2 des wenigstens einen Applikationsparameters mehr als ein Applikationsparameter bereitgestellt. Mit anderen Worten werden Bedingungen bezüglich mehr als einer Eigenschaft des Ausführungsortes vorgegeben. Dabei werden in dem Verfahrensschritt des Bestimmens DET-1 von verfügbaren Ausführungsorten von den verfügbaren Ausführungsorten für jedem bereitgestellten Applikationsparameter ein entsprechender Ausführungsparameter bereitgestellt. Mit anderen Worten stellt jeder verfügbare Ausführungsort wenigstens so viele Ausführungsparameter bereit, wie auch Applikationsparameter bereitgestellt werden. Dabei gibt jeweils wenigstens ein Ausführungsparameter eines Ausführungsortes einen konkreten Wert für eine durch einen Applikationsparameter bedingte Eigenschaft an. Wenn ein Ausführungsort für einen Applikationsparameter keinen entsprechenden Ausführungsparameter bzw. keinen konkreten Wert angeben kann, umfasst der Ausführungsparameter einen Default-Wert, beispielsweise einen NaN Wert bzw. gibt der Ausführungsparameter diesen an.

In einer Ausführung der Erfindung ist den Applikationsparametern jeweils ein Wichtungsfaktor zugeordnet. Insbesondere ist jedem Applikationsparameter ein Wichtungsfaktor zugeordnet. Der Wichtungsfaktor eines Applikationsparameters gibt dabei an, wie relevant das Erfüllen der durch den Applikationsparameter aufgestellten Bedingung durch den Ausführungsort zum Ausführen der Applikation ist. Die Wichtungsfaktoren können beispielsweise einen Wert zwischen 0 und 1 annehmen. Dabei bedeutet 0, dass der entsprechende Applikationsparameter nicht relevant für das Ausführen der Applikation und damit für das Bestimmen des optimalen Ausführungsortes ist. Ein Wichtungsfaktor von 1 bedeutet, dass das Erfüllen der von dem entsprechenden Applikationsparameter vorgegebenen Bedingung von großer Relevanz für das Bestimmen des optimalen Ausführungsortes zum Ausführen der Applikation ist. In dem Verfahrensschritt des Bestimmens DET-2 des optimalen Ausführungsortes wird dementsprechend das Erfüllen der durch die Applikationsparameter vorgegebenen Bedingungen durch die Ausführungsparameter entsprechend der Wichtungsfaktoren berücksichtigt bzw. gewichtet. Das Erfüllen der Bedingung eines Applikationsparameters mit einem kleinen Wichtungsfaktor wiegt somit bei der Wahl des optimalen Ausführungsortes nicht so viel, wie das Erfüllen einer Bedingung eines Applikationsparameters mit einem großen Wichtungsfaktor. "Klein" kann in oben genannten Beispiel nahe 0 oder 0 bedeuten und "groß" kann nahe 1 oder 1 bedeuten.

In Ausführungen der Erfindung hängen die Wichtungsfaktoren der Applikationsparameter von den Daten ab, die mir der Applikation verarbeitet werden sollen, bzw. auf die die Applikation angewendet werden soll. Mit anderen Worten können die Wichtungsfaktoren der Applikationsparameter derselben Applikation für eine Verarbeitung von verschiedenen Daten unterschiedlich sein. Beispielsweise kann die Applikation eine Bildverarbeitungsapplikation sein. Insbesondere kann die Applikation eine Applikation zur Rekonstruktion von Computer-Tomographie-Bilddatensätzen sein. Ein Applikationsparameter der Applikation kann beispielsweise eine maximale Latenz vorgeben. Ein anderer Applikationsparameter der Applikation kann als Bedingung angeben, wie viel das Ausführen der Applikation maximal kosten darf. Wenn beispielsweise ein Computer-Tomographie-Bilddatensatz eines Patienten mit Verdacht auf einen Schlaganfall durch Anwenden der Applikation auf den Bilddatensatz rekonstruiert werden soll, kann der Wichtungsfaktor der Latenz größer sein als der Kosten. Wenn ein Computer-Tomographie-Bilddatensatz im Zuge einer Routineuntersuchung, beispielsweise im Zuge einer Nachsorge eines Patienten, durch Anwenden der Applikation auf den Bilddatensatz rekonstruiert werden soll, kann der Wichtungsfaktor der Kosten größer sein als der Wichtungsfaktor der Latenz. Auf diese Weise kann berücksichtigt werden, dass in einer Notfallsituation die Zeit eine größere Rolle spielt als die Kosten, während bei einer Routineuntersuchung bzw. einer Kontrolluntersuchung typischerweise kein Zeitdruck besteht und somit die Kosten stärker berücksichtigt werden können.

In Ausführungen der Erfindung kann der wenigstens eine Applikationsparameter von den Daten, die mit der Applikation verarbeitet werden sollen bzw. auf die die Applikation angewendet werden soll, abhängen. Mit anderen Worten kann die Bedingung, die bezüglich einer Eigenschaft des Ausführungsortes zum Ausführen der Applikation mittels des wenigstens einen Applikationsparameters aufgestellt wird, an die zu verarbeitenden Daten angepasst werden. Alternativ oder zusätzlich können auch die Applikationsparameter in Abhängigkeit der zu verarbeitenden Daten verschieden sein. Mit anderen Worten können in Abhängigkeit der zu verarbeitenden Daten verschiedene Applikationsparameter bezüglich unterschiedlicher Eigenschaften für die Applikation bereitgestellt werden. Auf diese Weise kann berücksichtigt werden, dass bei verschiedenen Daten verschiedene Eigenschaften des Ausführungsortes eine Rolle spielen. Beispielsweise kann die Bedingung für die Latenz in Abhängigkeit der zu verarbeitenden Daten verschieden ausgebildet sein. Mit anderen Worten kann der Applikationsparameter, welcher eine Bedingung für die Latenz vorgibt in Abhängigkeit der Daten verschieden ausgebildet sein. Der Applikationsparameter kann dabei beispielsweise eine maximale Dauer für die Latenz vorgeben. Diese Dauer kann bei der Verarbeitung von neu erfassten Daten durch die Applikation geringer sein, als wenn Daten verarbeitet werden sollen, die bereits einige Zeit in der Datenbank hinterlegt sind und offensichtlich nicht zeitkritisch verarbeitet werden müssen.

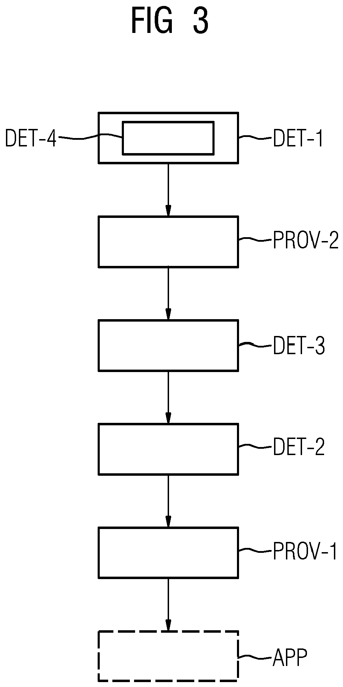

**Figur 3** zeigt ein drittes Ausführungsbeispiel eines Verfahrens zum Bestimmen eines optimalen Ausführungsortes einer Applikation.

Die Verfahrensschritte des Bestimmens DET-1 der verfügbaren Ausführungsorte, des Bestimmens DET-2 des optimalen Ausführungsortes und des Bereitstellens PROV-1 des optimalen Ausführungsortes sind analog zu der Beschreibung zu Figur 1 ausgebildet. Die Verfahrensschritte des Bereitstellens PROV-2 von wenigstens einem Applikationsparameter und des Bestimmens DET-3 eines optimalen Applikationsparameters sind analog zu der Beschreibung zu Figur 2 ausgebildet. Die optionalen Ausführungsbeispiele, die im Zusammenhang mit den Figuren 1 und 2 beschrieben wurden, können auch auf das im Folgenden beschriebene dritte Ausführungsbeispiel übertragen werden.

In dem dargestellten Ausführungsbeispiel wird der Verfahrensschritt des Bestimmens DET-1 der verfügbaren Ausführungsorte zu einem ersten Zeitpunkt durchgeführt. Der Verfahrensschritt des Ausführens APP der Applikation an dem optimalen Ausführungsort ist zu einem zweiten Zeitpunkt geplant. Der erste Zeitpunkt liegt dabei vor dem zweiten Zeitpunkt.

Der Verfahrensschritt des Bestimmens DET-1 der verfügbaren Ausführungsorte umfasst dabei für jeden der verfügbaren Ausführungsorte einen Verfahrensschritt eines Bestimmens DET-4 des wenigstens einen Ausführungsparameters des Ausführungsortes für den zweiten Zeitpunkt. Mit anderen Worten wird zu dem ersten Zeitpunkt für jeden verfügbaren Ausführungsort bestimmt, wie der entsprechende Ausführungsparameter zu dem zweiten Zeitpunkt sein wird. Mit anderen Worten wird der Wert des Ausführungsparameters für jeden Ausführungsort zum zweiten Zeitpunkt bestimmt. Mit anderen Worten wird für jeden Ausführungsort der entsprechend bereitgestellte wenigstens eine Ausführungsparameter an dem ersten Zeitpunkt für den zweiten Zeitpunkt vorhergesagt. Wie oben beschrieben, kann, wenn ein Ausführungsparameter nicht vorhergesagt werden kann, der Wert des Ausführungsparameters bzw. der Ausführungsparameter durch einen Default-Wert, beispielsweise einen NaN Wert, ersetzt werden.

Insbesondere kann auf diese Weise bereits zum ersten Zeitpunkt basierend auf den vorhergesagten, bereitgestellten Ausführungsparametern der optimale Ausführungsort für die Applikation zum zweiten Zeitpunkt bestimmt werden.

In Ausführungen der Erfindung kann für jeden Ausführungsort der wenigstens eine Ausführungsparameter in dem Verfahrensschritt des Bestimmens DET-4 des wenigstens einen Ausführungsparameters durch Anwenden einer trainierten Funktion auf dem Ausführungsparameter entsprechende Ausführungsparameter aus der Vergangenheit bestimmt werden. Wie oben beschrieben wird der wenigstens eine Ausführungsparameter für den zweiten Zeitpunkt bestimmt. Die trainierte Funktion wird dabei auf wenigstens einen entsprechenden Ausführungsparameter angewendet, der vor oder an dem ersten Zeitpunkt erfasst wurde. Insbesondere kann die trainierte Funktion auf eine zeitliche Sequenz von entsprechenden Ausführungsparametern angewendet werden, die vor oder an dem ersten Zeitpunkt erfasst wurden. "Entsprechend" bedeutet dabei, dass die Ausführungsparameter dieselbe Eigenschaft des Ausführungsortes betreffen bzw. beschreiben bzw. charakterisieren. "Aus der Vergangenheit" bedeutet dabei, dass die Ausführungsparameter "aus der Vergangenheit" vor oder spätestens an dem ersten Zeitpunkt erfasst wurden. Mit anderen Worten kann die trainierte Funktion also dazu ausgebildet sein, basierend auf einem bekannten Verhalten der Eigenschaft des Ausführungsortes den Ausführungsparameter für den zweiten Zeitpunkt vorherzusagen. Die trainierte Funktion kann dabei wie oben beschrieben ausgebildet und trainiert sein. Die trainierte Funktion ist dabei für jeden Ausführungsort und jeden Ausführungsparameter individuell, insbesondere verschieden. Mit anderen Worten ist das Training der trainierten Funktion auf den Ausführungsort und den Ausführungsparameter angepasst.

In Ausführungen der Erfindung werden die Daten, welche mit der Applikation verarbeitet werden sollen, zu einem dritten Zeitpunkt erfasst. Der dritte Zeitpunkt liegt dabei zwischen dem ersten und dem zweiten Zeitpunkt oder ist gleich dem ersten Zeitpunkt. Wie oben beschrieben, kann durch das Vorhersagen bzw. Bestimmen der Ausführungsparameter für den zweiten Zeitpunkt bereits am ersten Zeitpunkt der optimale Ausführungsort zum Ausführen der Applikation zum zweiten Zeitpunkt bestimmt werden. Somit ist bereits beim Erfassen der Daten am dritten Zeitpunkt bekannt, an welchem Ausführungsort die Daten am zweiten Zeitpunkt verarbeitet werden sollen bzw. an welchem Ausführungsort die Applikation ausgeführt und dabei auf die Daten angewendet werden soll. Somit können die Daten bereits beim Erfassen an den optimalen Ausführungsort übermittelt bzw. versendet werden.

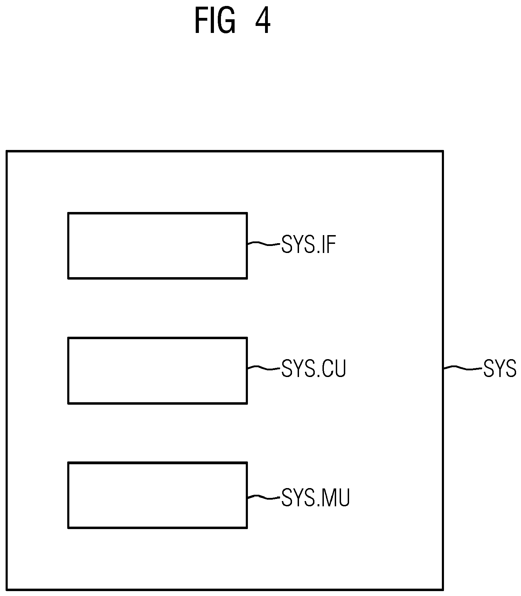

**Figur 4** zeigt ein Bestimmungssystem SYS zum Bestimmen eines optimalen Ausführungsortes einer Applikation.

Das dargestellte Bestimmungssystem SYS zum Bestimmen eines optimalen Ausführungsortes einer Applikation ist dazu ausgebildet ein erfindungsgemäßes Verfahren zum Bestimmen eines optimalen Ausführungsortes einer Applikation auszuführen. Das Bestimmungssystem SYS umfasst eine Schnittstelle SYS.IF, eine Recheneinheit SYS.CU und eine Speichereinheit SYS.MU.

Das Bestimmungssystem SYS kann insbesondere ein Computer, ein Mikrocontroller oder ein integrierter Schaltkreis (integrated circuit, IC) sein. Alternativ kann das Bestimmungssystem SYS ein reales oder virtuelles Computer-Netzwerk sein (eine technische Bezeichnung für ein reales Computer-Netzwerk ist "Cluster", eine technische Bezeichnung für ein virtuelles Computer-Netzwerk ist "Cloud"). Das Bestimmungssystem SYS kann als virtuelles System ausgebildet sein, welches auf einem Computer oder einem realen Computer-Netzwerk oder einem virtuellen Computer-Netzwerk ausgeführt wird (eine technische Bezeichnung ist "Virtualization").

Die Schnittstelle SYS.IF kann eine Hardware- oder Software-Schnittstelle sein (beispielsweise ein PCI bus, USB oder Firewire). Die Recheneinheit SYS.CU kann Hardware und/oder Software Bestandteile umfassen, beispielsweise einen Mikroprozessor oder einen sogenannten FPGA (Field Programmable Gate Way). Die Speichereinheit SYS.MU kann als nicht permanent arbeitender Arbeitsspeicher (Random Access Memory, RAM) oder als permanenter Massenspeicher (Festplatte, USB-Stick, SD-Karte, Solid State Disk (SSD)) ausgebildet sein.

Die Schnittstelle SYS.IF kann insbesondere eine Mehrzahl an Sub-Schnittstellen umfassen, die unterschiedliche Verfahrensschritte des jeweiligen erfindungsgemäßen Verfahrens ausführen. Mit anderen Worten kann die Schnittstelle SYS.IF als eine Mehrzahl an Schnittstellen SYS.IF ausgebildet sein. Die Recheneinheit SYS.CU kann insbesondere eine Mehrzahl an Sub-Recheneinheiten umfassen, die unterschiedliche Verfahrensschritte des jeweiligen erfindungsgemäßen Verfahrens ausführen. Mit anderen Worten kann die Recheneinheit SYS.CU als eine Mehrzahl an Recheneinheiten SYS.CU ausgebildet sein.

Wo noch nicht explizit geschehen, jedoch sinnvoll und im Sinne der Erfindung, können einzelne Ausführungsbeispiele, einzelne ihrer Teilaspekte oder Merkmale miteinander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

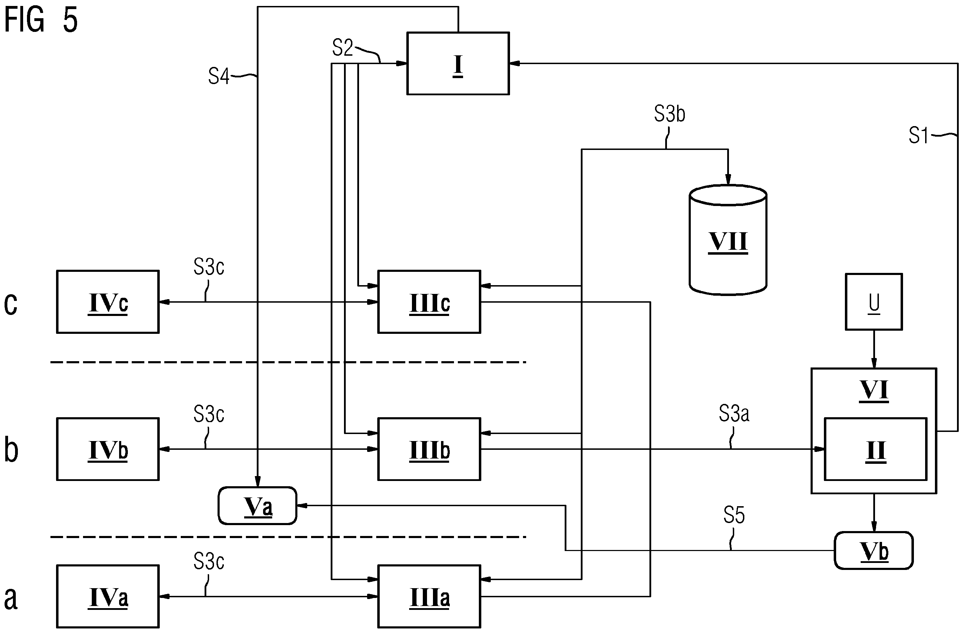

**Figur 5** zeigt ein Beispiel eines Datenstroms beim Ausführen eines Verfahrens zum Bestimmen eines optimalen Ausführungsortes einer Applikation

Die Ausführungsorte a, b, c sind in diesem Ausführungsbeispiel ein lokaler Rechner, beispielsweise eine lokale Modalität, ein Edge-System und ein Cloud-System. Auf jedem dieser Ausführungsorte läuft jeweils eine Lastanzeige (engl.: load indicator) IVa, IVb, IVc. Außerdem umfasst jeder der Ausführungsorte einen Applikations-Manager-Client IIIa, IIIb, IIIc.

Daten, die mit der Applikation Va verarbeitet werden sollen bzw. auf die die Applikation Va angewendet werden soll, sind in einem Datenspeicher VII hinterlegt bzw. gespeichert. Der Datenspeicher VII kann auch ein auf die Ausführungsorte a, b, c verteilter Datenspeicher sein. Insbesondere kann der Datenspeicher VII in einem der Ausführungsorte a, b, c angeordnet sein.

Die Applikation Va kann in Ausführungen der Erfindung außerdem eine Nutzerschnittstelle Vb umfassen, über welche ein Nutzer U die Applikation Va steuern, beispielsweise das Ausführen der Applikation initiieren, kann. Alternativ kann die Applikation autark bzw. selbstständig bzw. automatisiert bzw. ohne Nutzerinteraktion ausgeführt werden.

Der Nutzer U, beispielsweise ein Mediziner, insbesondere ein Radiologe, kann das Ausführen der Applikation über einen lokalen Rechner beispielsweise eine Modalität VI steuern. Die Modalität VI kann dabei insbesondere zum Erfassen der Daten ausgebildet sein. Der lokale Rechner VI umfasst einen Applikations-Manager II.

Wenn der Nutzer U an dem lokalen Rechner VI angibt, dass die Applikation Va ausgeführt werden soll, wird in einem ersten Schritt S1 eine Ausführungsanforderung an einen übergeordneten Applikations-Manager I versendet. Der übergeordnete Applikations-Manager I kann beispielsweise auf einem Server laufen. Der übergeordnete Applikations-Manager I kann insbesondere das in Figur 4 beschriebene Bestimmungssystem SYS ausbilden. Mit der Ausführungsanforderung kann der wenigstens eine, wie bezüglich der Figuren 2 und/oder 3 ausgebildete Applikationsparameter an den übergeordneten Applikations-Manager I versendet bzw. bereitgestellt werden.

In einem zweiten Schritt S2 fragt der übergeordnete Applikations-Manager I die wie gemäß der Figuren 1 bis 3 beschrieben ausgebildeten Ausführungsparameter der verschiedenen Ausführungsorte a, b, c über die jeweiligen Applikations-Manager-Clients IIIa, IIIb, IIIc ab. Die Applikations-Manager-Clients IIIa, IIIb, IIIc bestimmen in einem ersten Teilschritt eines dritten Schrittes S3a eine Netzwerkverbindungsqualität von dem jeweiligen Ausführungsort a, b, c zu dem lokalen Rechner VI des Nutzers U. In einem zweiten Teilschritt des dritten Schrittes S3b bestimmen die Applikations-Manager-Clients IIIa, IIIb, IIIc eine Datenverbindung für einen Zugriff auf die Daten in dem Datenspeicher VII. In einem dritten Teilschritt des dritten Schrittes S3c bestimmen die Applikations-Manager-Clients IIIa, IIIb, IIIc eine Auslastung des entsprechenden Ausführungsortes a, b, c durch eine Abfrage an die jeweilige Lastanzeige IVa, IVb, IVc. Dabei sind die Netzwerkverbindungsqualität, die Datenverbindung für den Zugriff auf die Daten und die Auslastung jeweils ein Ausführungsparameter für jeden der Ausführungsorte a, b, c. Die Ausführungsparameter können für einen aktuellen Zeitpunkt bestimmt werden. Alternativ können die Ausführungsparameter, wie bezüglich Figur 3 beschrieben, für einen Zeitpunkt in der Zukunft bestimmt werden, zu welchem die Applikation Va ausgeführt werden soll. Die Ausführungsparameter werden bei der Abfrage in dem zweiten Schritt S2 durch den übergeordneten Applikations-Manager I von jedem Ausführungsort a, b, c bzw. von jedem Applikations-Manager-Client IIIa, IIIb, IIIc der Ausführungsorte a, b, c dem übergeordneten Applikations-Manager I bereitgestellt.

Wie bezüglich der Figuren 2 und/oder 3 beschrieben, bestimmt der übergeordnete Applikations-Manager I in Abhängigkeit des bereitgestellten wenigstens einen Applikationsparameters und der bereitgestellten Ausführungsparameter den optimalen Ausführungsort. Der übergeordnete Applikations-Manager I startet in einem vierten Schritt S4 die Applikation Va an dem bestimmten optimalen Ausführungsort b. Insbesondere kann der übergeordnete Applikations-Manager I den Applikations-Manager II des lokalen Rechners VI über den optimalen Ausführungsort b informieren.

In Ausführungen der Erfindung kann dann der Applikations-Manager II des lokalen Rechners VI die Nutzerschnittstelle Vb der Applikation starten. Über die Nutzerschnittstelle Vb erhält der Nutzer U in einem fünften Schritt S5 Zugriff auf die Applikation Va an dem optimalen Ausführungsort b. Der Nutzer U kann dann beispielsweise das Ausführen der Applikation Va starten bzw. initiieren. Mit anderen Worten kann der Nutzer U die Applikation Va auf die Daten an dem optimalen Ausführungsort b anwenden.

Alternativ kann die Applikation Va direkt mit dem Starten der Applikation Va durch den übergeordneten Applikations-Manager I ausgeführt bzw. auf die Daten angewendet werden. Insbesondere kann dafür in Ausführungen der Erfindung keine Nutzereingabe notwendig sein.

Wie oben beschrieben kann die Applikation Va in einem Container an dem optimalen Ausführungsort b ausgeführt werden.

## Patentansprüche

1. Computerimplementiertes Verfahren zum Bestimmen eines optimalen Ausführungsortes (b) einer Applikation (Va) umfassend folgende Verfahrensschritte:
- Bestimmen (DET-1) von verfügbaren Ausführungsorten (a, b, c),
wobei jeder der verfügbaren Ausführungsorte (a, b, c) wenigstens einen Ausführungsparameter bereitstellt,
wobei der von einem verfügbaren Ausführungsort (a, b, c) bereitgestellte wenigstens eine Ausführungsparameter dazu ausgebildet ist, eine Eignung des entsprechenden verfügbaren Ausführungsortes (a, b, c) zu quantifizieren,
- Bestimmen (DET-2) des optimalen Ausführungsortes (b) in Abhängigkeit der bereitgestellten Ausführungsparameter,
wobei der optimale Ausführungsort (b) derjenige Ausführungsort (a, b, c) ist, welcher gemäß der bereitgestellten Ausführungsparameter am besten zum Ausführen der Applikation (Va) geeignet ist,
- Bereitstellen (PROV-1) des optimalen Ausführungsortes (b).

2. Verfahren nach Anspruch 1 außerdem umfassend folgende Verfahrensschritte:
- Bereitstellen (PROV-2) von wenigstens einem Applikationsparameter durch die Applikation (Va),
wobei der wenigstens eine Applikationsparameter eine Bedingung vorgibt, die zum Ausführen der Applikation (Va) erfüllt sein muss,
wobei in dem Verfahrensschritt des Bestimmens (DET-1) von verfügbaren Ausführungsorten (a, b, c) jeder der verfügbaren Ausführungsorte (a, b, c) einen dem wenigstens einen Applikationsparameter entsprechenden Ausführungsparameter bereitstellt,
- Bestimmen (DET-3) eines optimalen Ausführungsparameters, wobei der optimale Ausführungsparameter derjenige Ausführungsparameter ist, der die durch den wenigstens einen Applikationsparameter vorgegebene Bedingung am besten erfüllt, wobei der in dem Verfahrensschritt des Bestimmens (DET-2) des optimalen Ausführungsortes (b) bestimmte optimale Ausführungsort derjenige Ausführungsort (a, b, c) ist, der den optimalen Ausführungsparameter bereitstellt.

3. Verfahren nach einem der vorhergehenden Ansprüche, außerdem umfassend folgenden Verfahrensschritt:
- Ausführen (APP) der Applikation (Va) an dem optimalen Ausführungsort (b).

4. Verfahren nach Anspruch 3,
wobei die Applikation (Va) in dem Verfahrensschritt des Ausführens (APP) der Applikation (Va) in einem Container an dem optimalen Ausführungsort (b) ausgeführt wird.

5. Verfahren nach einem der Ansprüche 2 bis 4,
wobei der wenigstens eine Applikationsparameter eine Bedingung bezüglich einer der folgenden Eigenschaften vorgibt:
Datenzugriffsgeschwindigkeit, Netzwerkgeschwindigkeit, Speicherort von Daten, Datenmenge, aktuelle und/oder vorhergesagte Ressourcenverfügbarkeit, Kosten der Ausführung und/oder der Datenspeicherung, Datensicherheitsanforderungen, Performanceanforderungen, Latenz,
wobei die bereitgestellten Ausführungsparameter einen konkreten Wert für die durch den entsprechenden Applikationsparameter vorgegebene Bedingung umfassen.

6. Verfahren nach einem der Ansprüche 2 bis 5,
wobei in dem Verfahrensschritt des Bereitstellens (PROV-2) des wenigstens einen Applikationsparameters mehr als ein Applikationsparameter bereitgestellt wird,
wobei in dem Verfahrensschritt des Bestimmens (DET-1) von verfügbaren Ausführungsorten (a, b, c) von den verfügbaren Ausführungsorten (a, b, c) für jeden bereitgestellten Applikationsparameter ein entsprechender Ausführungsparameter bereitgestellt wird.

7. Verfahren nach Anspruch 6,
wobei den Applikationsparametern jeweils ein Wichtungsfaktor zugeordnet ist,
wobei in dem Verfahrensschritt des Bestimmens (DET-2) des optimalen Ausführungsortes (b) das Erfüllen der durch die Applikationsparameter vorgegebenen Bedingungen durch die von den Ausführungsorten (a, b, c) bereitgestellten Ausführungsparameter gemäß den Wichtungsfaktoren der Applikationsparameter berücksichtigt werden.

8. Verfahren nach einem der Ansprüche 2 bis 7,
wobei die Applikation (Va) zum Verarbeiten von Daten ausgebildet ist,
wobei die Wichtungsfaktoren von den Daten, die mit der Applikation (Va) verarbeitet werden sollen, abhängen.

9. Verfahren nach einem der Ansprüche 2 bis 8,
wobei die Applikation (Va) zum Verarbeiten von Daten ausgebildet ist,
wobei der wenigstens eine Applikationsparameter von den Daten, die mit der Applikation (Va) verarbeitet werden sollen, abhängt.

10. Verfahren nach einem der vorhergehenden Ansprüche,
wobei der Verfahrensschritt des Bestimmens (DET-1) der verfügbaren Ausführungsorte (a, b, c) zu einem ersten Zeitpunkt durchgeführt wird,
wobei ein Verfahrensschritt eines Ausführens (APP) der Applikation (Va) an dem optimalen Ausführungsort (b) zu einem zweiten Zeitpunkt geplant ist,
wobei der erste Zeitpunkt zeitlich vor dem zweiten Zeitpunkt liegt,
wobei der Verfahrensschritt des Bestimmens (DET-1) der verfügbaren Ausführungsorte (a, b, c) für jeden Ausführungsort (a, b, c) folgenden Verfahrensschritt umfasst:
- Bestimmen (DET-4) des wenigstens einen Ausführungsparameters des Ausführungsortes (a, b, c) für den zweiten Zeitpunkt.

11. Verfahren nach Anspruch 10,
wobei die Ausführungsparameter der verfügbaren Ausführungsorte (a, b, c) für den zweiten Zeitpunkt für jeden Ausführungsort (a, b, c) in dem Verfahrensschritt des Bestimmens (DET-4) des wenigstens einen Ausführungsparameters des Ausführungsortes (a, b, c) durch Anwenden einer trainierten Funktion auf dem wenigstens einen Ausführungsparameter entsprechenden wenigstens einen Ausführungsparameter aus der Vergangenheit bestimmt werden.

12. Verfahren nach einem der Ansprüche 9 oder 11,
wobei die Applikation (Va) zum Verarbeiten von Daten ausgebildet ist,
wobei die Daten zu einem dritten Zeitpunkt erfasst werden, wobei der dritte Zeitpunkt zeitlich vor dem zweiten Zeitpunkt liegt,
wobei der erste Zeitpunkt zeitlich vor dem dritten Zeitpunkt liegt oder wobei der erste Zeitpunkt gleich dem dritten Zeitpunkt ist,
wobei die Daten beim Erfassen direkt an den optimalen Ausführungsort (b) versendet werden.

13. Verfahren nach einem der vorhergehenden Ansprüche,
wobei die Applikation (Va) eine medizinische Applikation ist.

14. Verfahren nach einem der vorhergehenden Ansprüche,
wobei die verfügbaren Ausführungsorte (a, b, c) Orten aus der folgenden Liste entsprechen können: ein Cloud-System, ein Edge-System, ein lokaler Rechner, eine Modalität, lokales oder zentrales Rechenzentrum.

15. Verfahren nach einem der vorhergehenden Ansprüche,
wobei nach dem Bestimmen (DET-2) des optimalen Ausführungsortes (b) ein Nutzer (U) Zugriff auf den optimalen Ausführungsort (b) zum Ausführen der Applikation (Va) erhält.

16. Bestimmungssystem (SYS) zum Bestimmen eines optimalen Ausführungsortes (b) einer Applikation (Va) umfassend eine Schnittstelle (SYS.IF) und eine Recheneinheit (SYS.CU), dabei ist die Schnittstelle (SYS.IF) und/oder die Recheneinheit (SYS.CU) zum Bestimmen (DET-1) von verfügbaren Ausführungsorten ausgebildet,
wobei die Schnittstelle (SYS.IF) dazu ausgebildet ist, von jedem der verfügbaren Ausführungsorte (a, b, c) wenigstens einen Ausführungsparameter zu empfangen,
dabei ist der von einem verfügbaren Ausführungsort (a, b, c) bereitgestellte wenigstens eine Ausführungsparameter dazu ausgebildet, eine Eignung des entsprechenden verfügbaren Ausführungsortes (a, b, c) zu quantifizieren,
dabei ist die Recheneinheit (SYS.CU) außerdem zum Bestimmen (DET-2) des optimalen Ausführungsortes (b) ausgebildet, wobei der optimale Ausführungsort (b) derjenige Ausführungsort (a, b, c) ist, welcher gemäß der bereitgestellten Ausführungsparameter am besten zum Ausführen der Applikation (Va) geeignet ist,
dabei ist die Schnittstelle (SYS.IF) außerdem zum Bereitstellen (PROV-1) des optimalen Ausführungsortes (b) ausgebildet.

17. Computerprogrammprodukt mit einem Computerprogramm, welches direkt in einen Speicher (703) eines Bestimmungssystems (700) ladbar ist, mit Programmabschnitten, um alle Schritte des Verfahrens nach einem der Ansprüche 1 bis 15 auszuführen, wenn die Programmabschnitte von dem Bestimmungssystem (700) ausgeführt werden

18. Computerlesbares Speichermedium, auf welchem von einem Bestimmungssystem (700) lesbare und ausführbare Programmabschnitte gespeichert sind, um alle Schritte des Verfahrens nach einem der Ansprüche 1 bis 15 auszuführen, wenn die Programmabschnitte von dem Bestimmungssystem (700) ausgeführt werden.
